# EUROPEAN PATENT APPLICATION

(11) **EP 3 514 372 A1**
(43) Date of publication of application: **24.07.2019**
(21) Application number: 17850032.8
(22) Date of filing: 08.05.2017
(51) Int. Cl.: F03D 3/06, F03D 3/00, F03D 7/06

(54) **SHIELDING BLADE SUPPORTING PIECE TYPE VERTICAL AXIS WIND TURBINE**

(30) Priority: 18.09.2016 CN 201610826979; 18.09.2016 CN 201610827019
(71) Applicant: Li, Yibo, Lanzhou, Gansu 730070 (CN)
(72) Inventor: LI, Feng, Gansu 730314 (CN); LI, Yibo, Anning Disctrict Lanzhou Gansu 730070 (CN)
(74) Representative: Cabinet Laurent & Charras
(86) International application number: PCT/CN2017/083481
(87) International publication number: WO 2018/049826

(57) **Abstract**

Disclosed is a vertical axis wind turbine with its blade support shielded, including a wind wheel rotating about a vertical rotation axis and a bearing body (3) determining the vertical rotation axis. The wind wheel includes a wheel frame (1) and blades (2) distributed on the periphery of the wheel frame (1), the wheel frame (1) being rotatably connected to the bearing body (3); the upper portion and the lower portion of the wheel frame (1) are respectively provided with a group of blade supports, a baffle (P) being connected to a tail section or a tail end of each blade support distant from the vertical rotation axis; the baffle (P) is located between the tail section of the corresponding blade support and the corresponding blade (2), or the edge of the baffle (P) and the tail end of the corresponding blade support are integrally formed; the baffle (P) at the upper portion of the wheel frame (1) corresponds to the respective baffle (P) at the lower portion of the wheel frame (1), and a corresponding blade (2) is connected between the corresponding baffles (P); two ends of the blade (2) are connected to the corresponding baffles (P) directly or connected via a connecting piece. By improving the structure of the wind wheel, especially improving the mounting structure of the blades (2), the driving force of the blade (2) and the wind energy utilization efficiency can be improved.

## Description

### CROSS-REFERENCE TO RELATED APPLICATIONS

This application claims the priorities of Chinese Patent Application No. 201610826979.7, filed on September 18, 2016, entitled "Vertical Axis Wind Turbine with its Blade Support Shielded" and Chinese Patent Application No. 201610827019.2, filed on September 18, 2016, entitled "Cantilever for Vertical Axis Wind Turbine and Wind Turbine Having Same", the contents of which are incorporated herein by reference in their entireties.

### TECHNICAL FIELD

The present invention relates to a vertical axis wind turbine with its blade support shielded, belonging to the technical field of design and construction of wind turbines and the field of development and design of renewable energy source technology, energy conservation technology, and environmental protection technology.

### BACKGROUND

It is known by the applicant that most of the wind turbines used in the wind driven generator sets on the market currently are horizontal axis turbine type wind turbines with wind wheels having rotation axes horizontally disposed, which fall into the category of high speed wind turbine, which has poor performance at medium and low wind speeds and thus brings low running benefit in regions having an annual mean wind speed w̅ smaller than 6.5 miters per second. In addition, this kind of wind turbine has a high running noise and can generate infrasonic wave, and thus is unsuitable to be used in cities and communities and moreover does harm to the living environment of birds.

The vertical axis wind turbine has characteristics of no requirement for wind direction, no aerodynamic noise, no infrasonic wave generated, alternative outputting in sequence by blades during rotation of the wind wheel, and periodical change of blade loads. These characteristics bring both advantages and disadvantages, and it is important to utilize the advantages and suppress the disadvantages in order to develop the vertical axis wind turbine technology suitable for regions having an annual mean wind speed w̅ from 4 meters per second to 6 meters per second and suitable for the urban living environment.

### SUMMARY

In view of this, to address problems existing in the current vertical axis wind turbine, it is necessary to provide a vertical axis wind turbine with its blade support shielded, which has increased wind turbine performances by improving the structure of the wind wheel.

The above object is achieved by following technical schemes:
A vertical axis wind turbine with its blade support shielded includes a wind wheel rotatable about a vertical rotation axis and a bearing body determining the vertical rotation axis. The wind wheel includes a wheel frame and blades distributed at a periphery of the wheel frame. The wheel frame is rotatably connected to the bearing body. Wherein an upper portion and a lower portion of the wheel frame are respectively provided with one set of blade supports. A tail section or a tail end of each of the blade supports away from the vertical rotation axis is respectively connected with a baffle. The baffle is located between the tail section of a respective blade support and a respective blade, or an edge ofthe baffle is integrated with the tail end of a respective blade support. The baffle on the upper portion of the wheel frame vertically corresponds to the respective baffle on the lower portion of the wheel frame. A respective blade is connected between the corresponding baffles. Two ends of the blade are connected to the corresponding baffles directly or via a connecting piece.

In practical research, the applicant found that by disposing two ends of the blade on the baffles, and by shielding the tail sections of the blade supports with the baffles, or by integrating the baffles directly with the tail ends of the blade supports, which also has the shielding function, on one hand, the blade support is shielded, so that its interference to flow field, which is adverse to wind energy absorption of the blade, is eliminated; on the other hand, the baffle in such structure can be used as a mounting platform for a power controller for medium-to-large-scale wind turbines, so that the cost efficiency of the wind turbine is increased; in addition, the blade can absorb the wind energy at its entire height and have an effect of gathering wind, so that the performance loss at ends of the blade is decreased, and the driven force of the blade and the utilization efficiency of the wind energy are improved.

By adopting a preferred structure including a plate connecting piece, the configuration of the power controlling component can be optimized better, which is beneficial to improve performances of the wind turbine. When an elastic controller is adopted, the power of the wind turbine can be controlled by achieving an equilibrium of forces between the centrifugal force of the blade and the elastic force; moreover, due to the utilization of principle of decomposition of force, the precision and sensitivity requirements for an elastic piece of the elastic controller can be decreased, and thus the controlling cost is decreased. When an electric controller is adopted, the power of the wind turbine is controlled in an electric control manner.

When a plurality of wind wheels are used, wind wheels with opposite rotation directions are paired. Not only the windward plane formed by the paired wind wheels can be automatically regulated to be perpendicular to the wind direction, so that the wind wheels are prevented from being shielded by an upright column or a tower, thereby ensuring sufficient wind energy absorption of the wind wheels, but the start of the rotation of the wind wheel is facilitated, the torque and the centrifugal force load about the column or the tower are eliminated, and the overall stability of the integrated high power system is increased.

The present invention has following advantageous effects: by improving the structure of the wind wheel, especially improving the mounting structure of the blade, the present invention can eliminate interference to flow field generated by the blade supports, which is adverse to wind energy absorption of the blade, thereby increasing the utilization efficiency of the wind energy; the blade can absorb the wind energy at its entire height and have an effect of gathering wind, so that the performance loss at ends of the blade is decreased, and the driven force of the blade and the utilization efficiency of the wind energy are improved.

### BRIEF DESCRIPTION OF THE DRAWINGS

FIG. 1 is a schematic view of some cantilevers according to the present disclosure.
FIG. 2 is a structural schematic view of some baffle-cantilever combined bodies according to the present disclosure.
FIG. 3 is a schematic view of some double-arm-type cantilevers according to the present disclosure.
FIG. 4 is a schematic view of some four-arm-type cantilevers according to the present disclosure.
FIG. 5 is a structural schematic view of some baffle-tensile piece combined bodies according to the present disclosure.
FIGs. 6 to 21 are schematic views of some specific structures of a wheel frame (including an upper connection portion and a lower connection portion) according to the present disclosure.
FIG. 22 is a schematic view of another type of combined cantilever according to the present disclosure.
FIG. 23 is a schematic view of an isomeric combined cantilever according to the present disclosure.
FIG. 24 is a schematic view of a specific structure of a wheel frame (including an upper connection portion, an intermediate connection portion, and a lower connection portion) according to the present disclosure.
FIGs. 25 to 34 are structural schematic views of embodiments 1 to 10 of the present invention.
FIG. 35 is a schematic view of three kinds of top views V at position U of FIG. 34.
FIGs. 36 to 39 are structural schematic views of embodiments 11 to 14 of the present invention.

### DETAILED DESCRIPTION OF EMBODIMENTS

In order to make the purposes, technical solutions and advantages of the present invention to be understood more clearly, the present invention will be described in further details with the accompanying drawings and the following embodiments. It should be understood that the specific embodiments described herein are merely examples to illustrate the present invention, not to limit the present invention.

A vertical axis wind turbine with a shielded blade support of the present invention includes a wind wheel configured to rotate about a vertical rotation axis and a bearing body determining the vertical rotation axis. The wind wheel includes a wheel frame and blades distributed at a periphery of the wheel frame. The wheel frame is rotatably connected to the bearing body. An upper portion and a lower portion of the wheel frame are respectively provided with one set of blade supports. A tail section or a tail end of each of the blade supports away from the vertical rotation axis is respectively connected with a baffle. The baffle is located between the tail section of respective blade support and respective blade, or an edge of the baffle is integrated with the tail end of respective blade support. The baffle on the upper portion of the wheel frame vertically corresponds to the respective baffle on the lower portion of the wheel frame. A respective blade is connected between the corresponding baffles. Two ends of the blade are connected to the corresponding baffles directly or via connecting pieces.

A projected dimension of the baffle on a plane perpendicular to the vertical rotation axis satisfies: a maximum size in a radial direction of the wind wheel is 0.15 times to 0.85 times a radius of the wind wheel, and a maximum size in a direction perpendicular to the radial direction of the wind wheel is 0.7 times to 1.3 times a projected chord length of an end face of the blade on a baffle plane.

The wheel frame includes an upper connection portion and a lower connection portion, or includes an upper connection portion, an intermediate connection portion, and a lower connection portion. The upper connection portion and the lower connection portion are respectively provided with the blade support. The blade support of the upper connection portion is connected to an upper end of the blade via the baffle. The intermediate connection portion is connected to an intermediate portion of a blade. The blade support of the lower connection portion is connected to a lower end of the blade via the baffle.

A radial length of the blade support of the upper connection portion is equal to or different from a radial length of the blade support of the lower connection portion. The blade is connected between the upper connection portion and the lower connection portion vertically or at an angle inclined relative to a vertical direction.

The lower connection portion is at least two-fold rotationally symmetrical about the vertical rotation axis. The lower connection portion is shaped as a triangle or a trapezoid or a taper or a frustum. The taper is a pyramid or a cone. The frustum is a frustum of a pyramid or a cone. A vertex of the triangle or the taper, or a base edge of the trapezoid having a shorter length, or a base face of the frustum having a smaller area forms a part of the lower connection portion that is close to the upper connection portion.

The lower connection portion can use one of a first configuration, a second configuration, a third configuration, and a fourth configuration.

The first configuration: The wheel frame further includes a wheel axle with the vertical rotation axis as a center line. A lower end of the wheel axle and the lower connection portion are directly fixedly connected, or coaxially fixedly connected with a flange or a transmission body, or coaxially sleeved with a transmission body. An upper end of the wheel axle and the upper connection portion are directly fixedly connected, or coaxially fixedly connected with a flange or a transmission body, or coaxially sleeved with a transmission body. When the lower end of the wheel axle and the lower connection portion are directly fixedly connected, or coaxially fixedly connected with a flange, or coaxially sleeved with a transmission body, the upper end of the wheel axle is coaxially fixedly connected to a transmission body. When the upper end of the wheel axle and the upper connection portion are directly fixedly connected, or coaxially fixedly connected with a flange, or coaxially sleeved with a transmission body, the lower end of the wheel axle is coaxially fixedly connected to a transmission body. The transmission body is rotatably connected to the bearing body.

The lower connection portion includes a cantilever for the vertical axis wind turbine and a tensile piece. When the lower end of the wheel axle is directly fixedly connected to the lower connection portion, a support connection end of the cantilever for the vertical axis wind turbine is connected to the lower end of the wheel axle directly or via a connection segment. When the lower end of the wheel axle is coaxially fixedly connected with the flange or the transmission body, the support connection end of the cantilever for the vertical axis wind turbine is connected to the flange or the transmission body directly or via a connection segment.

Ablade connection end ofthe cantilever for the vertical axis wind turbine is fixedly connected to the tensile piece, and a tail end of the tensile piece away from the vertical rotation axis is connected to the blade via the baffle. Or the blade connection end of the cantilever for the vertical axis wind turbine is connected to the blade via the baffle, and the tail end of the tensile piece is fixedly connected to the cantilever for the vertical axis wind turbine.

The cantilever for the vertical axis wind turbine constitutes a side edge of the shape of the lower connection portion. The tensile piece constitutes or is parallel to a lower base edge or a lower base face of the shape of the lower connection portion.

The second configuration: The wheel frame further includes a wheel axle with the vertical rotation axis as a center line. A lower end of the wheel axle and the lower connection portion are directly fixedly connected, or coaxially fixedly connected with a flange or a transmission body, or coaxially sleeved with a transmission body. An upper end of the wheel axle and the upper connection portion are directly fixedly connected, or coaxially fixedly connected with a flange or a transmission body, or coaxially sleeved with a transmission body. When the lower end of the wheel axle and the lower connection portion are directly fixedly connected, or coaxially fixedly connected with a flange, or coaxially sleeved with a transmission body, the upper end of the wheel axle is coaxially fixedly connected to a transmission body. When the upper end of the wheel axle and the upper connection portion are directly fixedly connected, or coaxially fixedly connected with a flange, or coaxially sleeved with a transmission body, the lower end of the wheel axle is coaxially fixedly connected to a transmission body. The transmission body is rotatably connected to the bearing body.

The lower connection portion includes a cantilever for the vertical axis wind turbine. When the lower end of the wheel axle is directly fixedly connected to the lower connection portion, a support connection end of the cantilever for the vertical axis wind turbine is connected to the lower end of the wheel axle directly or via a connection segment. When the lower end of the wheel axle is coaxially fixedly connected to the flange or the transmission body, the support connection end of the cantilever for the vertical axis wind turbine is connected to the flange or the transmission body directly or via a connection segment. Ablade connection end of the cantilever for the vertical axis wind turbine is connected to the blade via the baffle. The cantilever for the vertical axis wind turbine constitutes a side edge of the shape of the lower connection portion.

The third configuration: The wheel frame further includes a transmission body rotatably connected to the bearing body.

The lower connection portion includes a cantilever for vertical axis wind turbine and a tensile piece. A support connection end of the cantilever for vertical axis wind turbine is connected to the transmission body directly or via a connection segment.

A blade connection end of the cantilever for vertical axis wind turbine is fixedly connected to the tensile piece, and a tail end of the tensile piece away from the vertical rotation axis is connected to the blade via the baffle. Or the blade connection end of the cantilever for the vertical axis wind turbine is connected to the blade via the baffle, and the tail end of the tensile piece is fixedly connected to the cantilever for the vertical axis wind turbine.

The cantilever for the vertical axis wind turbine constitutes a side edge of the shape of the lower connection portion. The tensile piece constitutes or is parallel to a lower base edge or a lower base face of the shape of the lower connection portion.

The fourth configuration: The wheel frame further includes a transmission body rotatably connected to the bearing body.

The lower connection portion includes a cantilever for the vertical axis wind turbine. A support connection end of the cantilever for the vertical axis wind turbine is connected to the transmission body directly or via a connection segment. A blade connection end of the cantilever for the vertical axis wind turbine is connected to the blade via the baffle. The cantilever for the vertical axis wind turbine constitutes a side edge of the shape of the lower connection portion.

The upper connection portion is at least two-fold rotationally symmetrical about the vertical rotation axis. The upper connection portion is shaped as triangle or trapezoid or taper or frustum. The taper is a pyramid or a cone. The frustum is a frustum of a pyramid or a cone. A vertex of the triangle or the taper, or a base edge having a shorter length of the trapezoid, or a base face having a smaller area of the frustum forms a part of the upper connection portion that is close to the lower connection portion.

The upper connection portion can use one of a fifth configuration, a sixth configuration, a seventh configuration, and an eighth configuration.

The fifth configuration: The wheel frame further includes a wheel axle with the vertical rotation axis as a center line. An upper end of the wheel axle and the upper connection portion are directly fixedly connected, or coaxially fixedly connected with a flange or a transmission body, or coaxially sleeved with a transmission body. A lower end of the wheel axle and the lower connection portion are directly fixedly connected, or coaxially fixedly connected with a flange or a transmission body, or coaxially sleeved with a transmission body. When the upper end ofthe wheel axle and the upper connection portion are directly fixedly connected, or coaxially fixedly connected with a flange, or coaxially sleeved with a transmission body, the lower end of the wheel axle is coaxially fixedly connected to a transmission body. When the lower end of the wheel axle and the lower connection portion are directly fixedly connected, or coaxially fixedly connected with a flange, or coaxially sleeved with a transmission body, the upper end of the wheel axle is coaxially fixedly connected to a transmission body. The transmission body is rotatably connected to the bearing body.

The upper connection portion includes a cantilever for the vertical axis wind turbine and a tensile piece, or includes a diagonal tensile piece and a tensile piece. When the upper end of the wheel axle is directly fixedly connected to the upper connection portion, a lower end of the diagonal tensile piece is fixedly connected to the upper end of the wheel axle, or a support connection end of the cantilever for the vertical axis wind turbine is connected to the upper end of the wheel axle directly or via a connection segment. When the upper end of the wheel axle is coaxially fixedly connected with the flange or the transmission body, the lower end of the diagonal tensile piece is fixedly connected to the flange or the transmission body, or the support connection end of the cantilever for the vertical axis wind turbine is connected to the flange or the transmission body directly or via a connection segment.

The upper end of the diagonal tensile piece or a blade connection end of the cantilever for the vertical axis wind turbine is fixedly connected to the tensile piece, and a tail end away from the vertical rotation axis of the tensile piece is connected to the blade directly via the baffle. Or the upper end of the diagonal tensile piece is connected to the blade via the baffle, or the blade connection end of the cantilever for the vertical axis wind turbine is connected to the blade via the baffle, and the tail end of the tensile piece is fixedly connected to diagonal tensile piece.

The diagonal tensile piece or the cantilever for the vertical axis wind turbine constitutes a side edge of the shape of the upper connection portion. The tensile piece constitutes or is parallel to an upper base edge or an upper base face of the shape of the upper connection portion.

The sixth configuration: The wheel frame further includes a wheel axle with the vertical rotation axis as a center line. An upper end of the wheel axle and the upper connection portion are directly fixedly connected, or coaxially fixedly connected with a flange or a transmission body, or coaxially sleeved with a transmission body. A lower end of the wheel axle and the lower connection portion are directly fixedly connected, or coaxially fixedly connected with a flange or a transmission body, or coaxially sleeved with a transmission body. When the upper end ofthe wheel axle and the upper connection portion are directly fixedly connected, or coaxially fixedly connected with a flange, or coaxially sleeved with a transmission body, the lower end of the wheel axle is coaxially fixedly connected to a transmission body. When the lower end of the wheel axle and the lower connection portion are directly fixedly connected, or coaxially fixedly connected with a flange, or coaxially sleeved with a transmission body, the upper end of the wheel axle is coaxially fixedly connected to a transmission body. The transmission body is rotatably connected to the bearing body.

The upper connection portion includes a diagonal tensile piece or a cantilever for the vertical axis wind turbine. When the upper end of the wheel axle is fixedly connected to the upper connection portion, a lower end of the diagonal tensile piece is fixedly connected to the upper end of the wheel axle, or a support connection end of the cantilever for the vertical axis wind turbine is connected to the upper end of the wheel axle directly or via a connection segment. When the upper end of the wheel axle is coaxially fixedly connected with the flange or the transmission body, the lower end of the diagonal tensile piece is fixedly connected to the flange or the transmission body, or the support connection end of the cantilever for the vertical axis wind turbine is connected to the flange or the transmission body directly or via a connection segment. An upper end of the diagonal tensile piece is connected to the blade via the baffle, or the support connection end of the cantilever for the vertical axis wind turbine is connected to the blade via the baffle. The diagonal tensile piece or the cantilever for the vertical axis wind turbine constitutes a side edge of the shape of the upper connection portion.

The seventh configuration: The wheel frame further includes a transmission body rotatably connected to the bearing body.

The upper connection portion includes a cantilever for the vertical axis wind turbine and a tensile piece, or includes a diagonal tensile piece and a tensile piece. A lower end of the diagonal tensile piece is fixedly connected to the transmission body, or a support connection end of the cantilever for the vertical axis wind turbine is connected to the transmission body directly or via a connection segment.

An upper end of the diagonal tensile piece or a blade connection end of the cantilever for the vertical axis wind turbine is fixedly connected to the tensile piece, and a tail end of the tensile piece away from the vertical rotation axis is connected to the blade via the baffle. Or the upper end of the diagonal tensile piece is connected to the blade via the baffle, or the blade connection end of the cantilever for the vertical axis wind turbine is connected to the blade via the baffle, and the tail end of the tensile piece is fixedly connected to the diagonal tensile piece.

The diagonal tensile piece or the cantilever for the vertical axis wind turbine constitutes a side edge of the shape of the upper connection portion. The tensile piece constitutes or is parallel to an upper base edge or an upper base face of the shape of the upper connection portion.

The eighth configuration: The wheel frame further includes a transmission body rotatably connected to the bearing body.

The upper connection portion includes a diagonal tensile piece and a cantilever for the vertical axis wind turbine. A lower end of the diagonal tensile piece is fixedly connected to the transmission body, or a support connection end of the cantilever for the vertical axis wind turbine is connected to the transmission body directly or via a connection segment. An upper end of the diagonal tensile piece is connected to the blade via the baffle, or a blade connection end of the cantilever for the vertical axis wind turbine is connected to the blade via the baffle. The diagonal tensile piece or the cantilever for the vertical axis wind turbine constitutes a side edge of the shape of the upper connection portion.

The intermediate connection portion is at least two-fold rotationally symmetrical about the vertical rotation axis. The intermediate connection portion is shaped as triangle or trapezoid or taper or frustum. The taper is a pyramid or a cone. The frustum is a frustum of a pyramid or a cone. A vertex of the triangle or the taper, or a base edge having a shorter length of the trapezoid, or a base face having a smaller area of the frustum forms a part of the intermediate connection portion that is close to the lower or upper connection portion.

The intermediate connection portion can use one of a ninth configuration, a tenth configuration, an eleventh configuration, and a twelfth configuration.

The ninth configuration: The wheel frame further includes a wheel axle with the vertical rotation axis as a center line. A lower end of the wheel axle and the lower connection portion are directly fixedly connected, or coaxially fixedly connected with a flange or a transmission body, or coaxially sleeved with a transmission body. An upper end of the wheel axle and the upper connection portion are directly fixedly connected, or coaxially fixedly connected with a flange or a transmission body, or coaxially sleeved with a transmission body. When the lower end of the wheel axle and the lower connection portion are directly fixedly connected, or coaxially fixedly connected with a flange, or coaxially sleeved with a transmission body, the upper end of the wheel axle is coaxially fixedly connected to a transmission body. When the upper end of the wheel axle and the upper connection portion are directly fixedly connected, or coaxially fixedly connected with a flange, or coaxially sleeved with a transmission body, the lower end of the wheel axle is coaxially fixedly connected to a transmission body. The transmission body is rotatably connected to the bearing body.

The intermediate connection portion includes a cantilever for the vertical axis wind turbine and a tensile piece. There is at least one intermediate connection portion. Each intermediate connection portion is respectively located at the upper end of the wheel axle, at the lower end of the wheel axle, or between the upper and lower ends of the wheel axle.

When the intermediate connection portion is located at the upper end of the wheel axle, if the upper end of the wheel axle is directly fixedly connected to the intermediate connection portion, then a support connection end of the cantilever for the vertical axis wind turbine is connected to the upper end of the wheel axle directly or via a connection segment; if the upper end of the wheel axle is coaxially fixedly connected with a flange or a transmission body or is coaxially sleeved with a transmission body, then the support connection end of the cantilever for the vertical axis wind turbine is connected to the flange or the transmission body directly or via a connection segment.

When the intermediate connection portion is located at the lower end of the wheel axle, if the lower end of the wheel axle is directly fixedly connected to the intermediate connection portion, then the support connection end of the cantilever for the vertical axis wind turbine is connected to the lower end of the wheel axle directly or via a connection segment; if the lower end of the wheel axle is coaxially fixedly connected with a flange or a transmission body or is coaxially sleeved with a transmission body, then the support connection end of the cantilever for the vertical axis wind turbine is connected to the flange or the transmission body directly or via a connection segment.

When the intermediate connection portion is located between the upper and lower ends of the wheel axle, the support connection end of the cantilever for the vertical axis wind turbine is connected to the wheel axle directly or via a connection segment, or the support connection end of the cantilever for the vertical axis wind turbine is connected to the flange or the transmission body directly or via a connection segment.

A blade connection of the cantilever for the vertical axis wind turbine is fixedly connected to the tensile piece, a tail end of the tensile piece away from the vertical rotation axis is connected to the blade directly or via the baffle. Or the blade connection of the cantilever for the vertical axis wind turbine is connected to the blade directly or via a connection portion or a connecting piece, and the tail end of the tensile piece is fixedly connected to the cantilever for the vertical axis wind turbine.

The cantilever for the vertical axis wind turbine constitutes a side edge of the shape of the intermediate connection portion. The tensile piece constitutes or is parallel to a base edge or a base face of the shape of the intermediate connection portion.

The tenth configuration: The wheel frame further includes a wheel axle with the vertical rotation axis as a center line. A lower end of the wheel axle and the lower connection portion are directly fixedly connected, or coaxially fixedly connected with a flange or a transmission body, or coaxially sleeved with a transmission body. An upper end of the wheel axle and the upper connection portion are directly fixedly connected, or coaxially fixedly connected with a flange or a transmission body, or coaxially sleeved with a transmission body. When the lower end of the wheel axle and the lower connection portion are directly fixedly connected, or coaxially fixedly connected with a flange, or coaxially sleeved with a transmission body, the upper end of the wheel axle is coaxially fixedly connected to a transmission body. When the upper end of the wheel axle and the upper connection portion are directly fixedly connected, or coaxially fixedly connected with a flange, or coaxially sleeved with a transmission body, the lower end of the wheel axle is coaxially fixedly connected to a transmission body. The transmission body is rotatably connected to the bearing body.

The intermediate connection portion includes a cantilever for the vertical axis wind turbine. There is at least one intermediate connection portion. Each intermediate connection portion is respectively located at the upper end of the wheel axle, at the lower end of the wheel axle, or between the upper and lower ends of the wheel axle.

When the intermediate connection portion is located at the upper end of the wheel axle, if the upper end of the wheel axle is directly fixedly connected to the intermediate connection portion, then a support connection end of the cantilever for the vertical axis wind turbine is connected to the upper end of the wheel axle directly or via a connection segment; if the upper end of the wheel axle is coaxially fixedly connected with a flange or a transmission body or is coaxially sleeved with a transmission body, then the support connection end of the cantilever for the vertical axis wind turbine is connected to the flange or the transmission body directly or via a connection segment.

When the intermediate connection portion is located at the lower end of the wheel axle, if the lower end of the wheel axle is directly fixedly connected to the intermediate connection portion, then the support connection end of the cantilever for the vertical axis wind turbine is connected to the lower end of the wheel axle directly or via a connection segment; if the lower end of the wheel axle is coaxially fixedly connected with a flange or a transmission body or is coaxially sleeved with a transmission body, then the support connection end of the cantilever for the vertical axis wind turbine is connected to the flange or the transmission body directly or via a connection segment.

When the intermediate connection portion is located between the upper and lower ends of the wheel axle, the support connection end of the cantilever for the vertical axis wind turbine is connected to the wheel axle directly or via a connection segment, or the support connection end of the cantilever for the vertical axis wind turbine is connected to the flange or the transmission body directly or via a connection segment.

A blade connection of the cantilever for the vertical axis wind turbine is connected to the blade directly or via a connection portion or a connecting piece. The cantilever for the vertical axis wind turbine constitutes a side edge of the shape of the intermediate connection portion.

The eleventh configuration: The wheel frame further includes a wheel axle with the vertical rotation axis as a center line. A lower end of the wheel axle and the lower connection portion are directly fixedly connected, or coaxially fixedly connected with a flange or a transmission body, or coaxially sleeved with a transmission body. An upper end of the wheel axle and the upper connection portion are directly fixedly connected, or coaxially fixedly connected with a flange or a transmission body, or coaxially sleeved with a transmission body. When the lower end of the wheel axle and the lower connection portion are directly fixedly connected, or coaxially fixedly connected with a flange, or coaxially sleeved with a transmission body, the upper end of the wheel axle is coaxially fixedly connected to a transmission body. When the upper end of the wheel axle and the upper connection portion are directly fixedly connected, or coaxially fixedly connected with a flange, or coaxially sleeved with a transmission body, the lower end of the wheel axle is coaxially fixedly connected to a transmission body. The transmission body is rotatably connected to the bearing body.

The intermediate connection portion includes a diagonal tensile piece and a horizontal tensile piece. There is at least one intermediate connection portion. Each intermediate connection portion is respectively located at the upper end of the wheel axle, at the lower end of the wheel axle, or between the upper and lower ends of the wheel axle.

When the intermediate connection portion is located at the upper end of the wheel axle, an upper end of the diagonal tensile piece is fixedly connected to the upper connection portion, and one end of the horizontal tensile piece is fixedly connected to the wheel axle or the flange or the transmission body.

A lower end of the diagonal tensile piece is fixedly connected to the horizontal tensile piece, and the other end of the horizontal tensile piece is directly connected to the blade. Or the lower end of the diagonal tensile piece is directly connected to the blade, and the other end of the horizontal tensile piece is fixedly connected to diagonal tensile piece.

When the intermediate connection portion is located at the lower end of the wheel axle, the lower end of the diagonal tensile piece is fixedly connected to the lower connection portion, and one end of the horizontal tensile piece is fixedly connected to the wheel axle or the flange or the transmission body.

The upper end of the diagonal tensile piece is fixedly connected to the horizontal tensile piece, and the other end of the horizontal tensile piece is directly connected to the blade. Or the upper end of the diagonal tensile piece is directly connected to the blade, and the other end of the horizontal tensile piece is fixedly connected to diagonal tensile piece.

When the intermediate connection portion is located between the upper and lower ends of the wheel axle, one end of the diagonal tensile piece and one end of the horizontal tensile piece are respectively fixedly connected to the wheel axle or the transmission body.

The other end of the diagonal tensile piece is fixedly connected to the horizontal tensile piece, and the other end of the horizontal tensile piece is directly connected to the blade. Or the other end of the diagonal tensile piece is directly connected to the blade, and the other end of the horizontal tensile piece is fixedly connected to the diagonal tensile piece.

The diagonal tensile piece constitutes a side edge of the shape of the intermediate connection portion. The horizontal tensile piece constitutes a base edge or a base face of the shape of the intermediate connection portion.

The cantilever for the vertical axis wind turbine includes a first main body component and a second main body component which are fixedly connected via a reinforcing piece. On end of the first main body component and one end of the second main body component are fixedly connected to each other, in contact with each other, or spaced from each other and together form the blade connection end of the cantilever. The other end of the first main body component and the other end of the second main body component are fixedly connected to, in contact with, or spaced from each other and together form the support connection end of the cantilever.

Shapes of the first and second main body components are respectively and independently selected from straight line shape and arc shape. The first and second main body components are aligned vertically or horizontally or diagonally.

When the blade connection end is connected to the blade of the wind wheel of the vertical axis wind turbine via a connection segment, the connection segment includes first bending segments respectively extending from the one ends of the first and second main body components. The first bending segments are parallel to each other, intersected and fixedly connected with each other, or overlapped with each other. When the first bending segments are parallel to each other or intersected and fixedly connected with each other, a reinforcing piece is disposed or no reinforcing piece is disposed between the first bending segments.

When the support connection end is connected to the wheel axle of the wind wheel of the vertical axis wind turbine, the transmission body, or the flange via a connection segment, the connection segment includes second bending segments respectively extending from the other end of the first main body component and the other end of the second main body component. The second bending segments are parallel to each other, intersected and fixedly connected with, each other or overlapped with each other. When the second bending segments are parallel to each other or intersected and fixedly connected with each other, a reinforcing piece is disposed or no reinforcing piece is disposed between the second bending segments.

The cantilever for the vertical axis wind turbine is formed by two sub-cantilevers fixedly connected via a reinforcing piece.

The sub-cantilever includes a first main body component and a second main body component which are fixedly connected via a reinforcing piece. On end of the first main body component and one end of the second main body component are fixedly connected to each other, in contact with each other, or spaced from each other and together form a first end of the sub-cantilever. The other end of the first main body component and the other end of the second main body component are fixedly connected to each other, in contact with each other, or spaced from each other and together form a second end of the sub-cantilever.

The first ends of the two sub-cantilevers are fixedly connected to each other, in contact with each other, or spaced from each other and together form the blade connection end of the cantilever. The second ends of the two sub-cantilevers are fixedly connected to each other, in contact with each other, or spaced from each other and together form the support connection end of the cantilever.

In the sub-cantilever, shapes of the first and second main body components are respectively and independently selected from straight line shape and arc shape. The first and second main body components are aligned vertically or horizontally or diagonally.

The two sub-cantilevers are aligned vertically or horizontally or diagonally.

When the blade connection end is connected to the blade of the wind wheel of the vertical axis wind turbine via a connection segment, the connection segment includes first bending segments respectively extending from one end of the first main body component and one end of the second main body component. The first bending segments are parallel to, intersected and fixedly connected with, or overlapped with each other. When the first bending segments are parallel to or intersected and fixedly connected with each other, a reinforcing piece is disposed or no reinforcing piece is disposed between the first bending segments.

When the support connection end is connected to the wheel axle of the wind wheel of the vertical axis wind turbine, the transmission body, or the flange via a connection segment, the connection segment includes second bending segments respectively extending from the other end of the first main body component and the other end of the second main body component. The second bending segments are parallel to, intersected and fixedly connected with, or overlapped with each other. When the second bending segments are parallel to or intersected and fixedly connected with each other, a reinforcing piece is disposed or no reinforcing piece is disposed between the second bending segments.

The reinforcement is shaped as straight line or X.

When the diagonal tensile piece is used, the diagonal tensile piece adopts a diagonal bracing structure or a bending cantilever structure.

The diagonal bracing structure: the diagonal tensile piece includes a straight line-shaped or arc-shaped main body component. A first bending segment is extended from one end of the main body component and fixedly connected to the wheel axle, the transmission body, or the flange. A second bending segment is extended from the other end of the main body component and fixedly connected to the tensile piece or the horizontal tensile piece.

The bending cantilever structure: the diagonal tensile piece includes a straight line-shaped or arc-shaped main body component. A first bending segment is extended from one end of the main body component and fixedly connected to the wheel axle, the transmission body, or the flange, or one end of the main body component is directly fixedly connected to the wheel axle, the transmission body, or the flange. A second bending segment is extended from the other end of the main body component and connected to the blade via the baffle, or the other end of the main body component is directly connected to the blade via the baffle.

When a horizontal tensile piece is used, the horizontal tensile piece adopts a straight line-shaped cantilever structure.

The straight line-shaped cantilever structure: The horizontal tensile piece includes a straight line-shaped main body component, one end of the main body component is connected to the blade via the baffle or integrated with the baffle. The other end of the main body component is directly fixedly connected to the wheel axle, or a bending segment is extended from the other end of the main body component and fixedly connected to the wheel axle.

When a tensile piece is used, the tensile piece adopts one of a straight form structure, a polygonal structure, and a special-shaped structure.

The straight form structure: The tensile piece includes at least one straight line shaped main body component. The main body component is located between adjacent two blades or two baffles or two diagonal tensile pieces or two cantilevers for the vertical axis wind turbine. Two ends of the main body component are respectively fixedly connected to corresponding baffle or diagonal tensile piece or cantilever for the vertical axis wind turbine.

The polygonal structure: The tensile piece is shaped as a polygon. A vertex of the polygon is corresponding to the blade or the baffle. The vertex of the polygon is fixedly connected to the corresponding baffle or diagonal tensile piece or cantilever for the vertical axis wind turbine.

The special-shaped structure: There is at least one tensile piece respectively located between adjacent two blades or baffles. The tensile piece is formed by two parallel straight line-shaped components or intersected bending line-shaped components which are fixedly connected via a reinforcement rib. The tail end of the straight line-shaped component or the bending line-shaped component is fixedly connected to the corresponding baffle.

When a transmission body is used, the transmission body adopts a structural body to connect with the bearing body and provide a transmitting function, including a cylinder, a circular tube, a flange, a circular ring, a component with a circular inner edge and a polygonal outer edge, or a vertically arranged double-layered or multilayered structural body formed by any combination of the flange and the circular ring and the component with the circular inner edge and the polygonal outer edge.

Two ends of the blade are fixedly connected to or rotatably connected to the corresponding baffle directly;
or
two ends of the blade are respectively fixedly connected to a connecting piece, the connecting piece is a rod-shaped component, and the rod-shaped component is fixedly connected to or rotatably connected to the corresponding baffle;
or
two ends of the blade are respectively fixedly connected to a connecting piece, the connecting piece is a plate, the plate is fixedly connected to or rotatably connected to the corresponding baffle via a mounting shaft; when the plate is rotatably connected to the corresponding baffle, the plate is provided with a connection hole to connect with an output of a power controller directly or in a transmission body way via a connecting rod; the power controller is placed on the corresponding baffle; the power controller is resilient controller or an electric controller;
or
the bearing body is a structure body including at least one of an upright column, a cross-bar, or a truss, vertical shaft;
or
The bearing body is selected from: an upright column or a tower; a cross-bar or a truss rotatably or fixedly connected to a tower or on an upright column; a cross-bar or a truss rotatably or fixedly connected to an upright column or on a tower, and a vertical shaft fixedly connected to the cross-bar or the truss; a floating buoy tower with an upright column; a cross-bar or a truss rotatably or fixedly connected to a floating buoy tower or on an upright column; a cross-bar or a truss rotatably or fixedly connected to a floating buoy tower or on an upright column, and a vertical shaft fixedly connected to the cross-bar or the truss;
or
there is at least one wind wheel; when there are at least two wind wheels, the least two wind wheels include a pair of wind wheels arranged symmetrically at two sides of a symmetry axis or include wind wheels located on a symmetry axis; rotation directions of the pair of wind wheels are opposite.

At first, cantilever type structures of the diagonal tensile piece and the horizontal tensile piece and an integrated structure of the tensile structure will be detailed described.

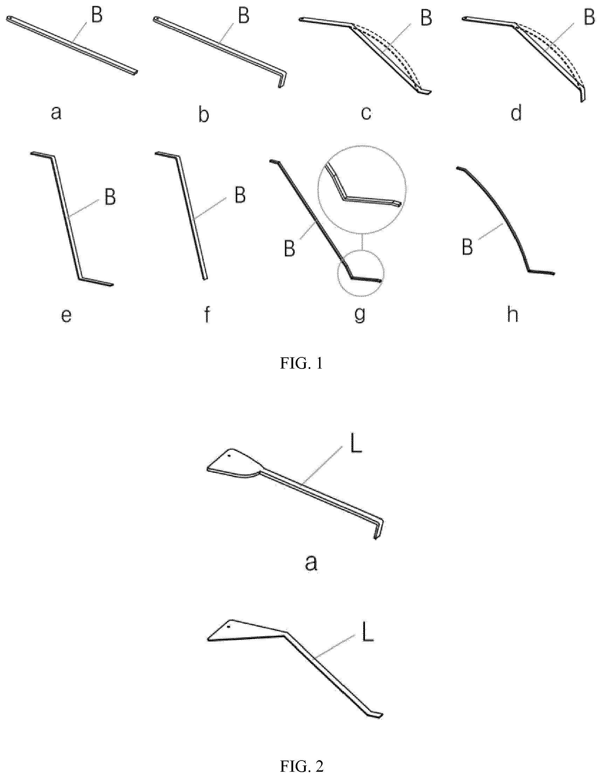

FIG. 1 shows ten types of single-cantilevers B of the present invention. Wherein FIG. 1a and FIG. 1b show straight cantilevers (i.e. specific structures adopted by the horizontal tensile piece), and FIGs. 1c to 1h show bending cantilevers (i.e. specific structures adopted by the diagonal tensile piece). More specifically, FIG. 1b shows a straight cantilever with a vertical mounting stem, FIG. 1c shows a bending cantilever with a horizontal mounting stem (the bending cantilever can further be shaped as an arc as shown by the dotted line), FIG. 1d shows a bending cantilever with a vertical mounting stem (the bending cantilever can further be shaped as an arc as shown by the dotted line), FIGs. 1e to 1h show four types of relative larger bending cantilevers, an enlarged view in FIG. 1g shows a part of the bending cantilever where is bended, and FIG. 1h shows an arc-shaped bending cantilever.

FIG. 2 shows two types of baffle-cantilever combined bodies L formed integrally by the baffle and the cantilever. Wherein FIG. 2a shows a baffle-straight cantilever combined body L formed integrally by the baffle and the straight cantilever B as shown in FIG. 1b (referred to simply as baffle-straight cantilever combination, i.e., including the structure adopted by the horizontal tensile piece). FIG. 2b shows a baffle-bending cantilever combined body L formed integrally by the baffle and the bending cantilever B as shown in FIG. 1c (referred to simply as baffle-bending cantilever combination, i.e., including the structure adopted by the diagonal tensile piece).

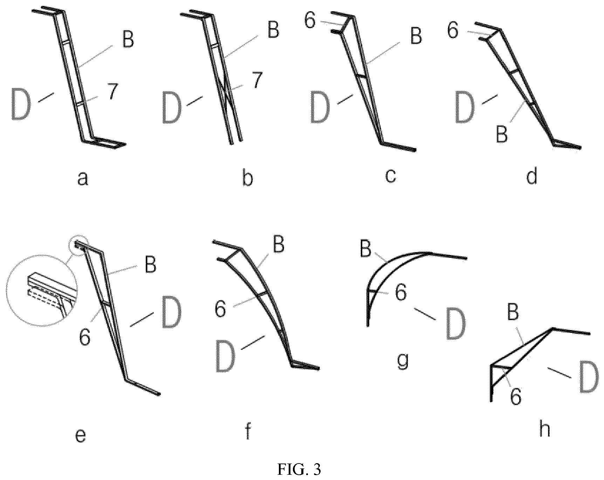

FIG. 3 shows nine types of double-arm-type cantilevers D of the present invention. Wherein FIG. 3a shows a horizontally aligned double-arm-type cantilever D which is constituted by two cantilevers B as shown in FIG. 1e and a plurality of straight reinforcing pieces 7 located between the two cantilevers B. FIG. 3b shows a horizontally aligned double-arm-type cantilever D which is constituted by two cantilevers B as shown in FIG. 1f and a plurality of straight reinforcing piece 7 and one X-shaped reinforcing piece 7 located between the two cantilevers B. FIG. 3c shows a vertically aligned double-arm-type cantilever D which is constituted by one cantilever B as shown in FIG. 1e, one cantilever B as shown in FIG. If, and a plurality of reinforcing pieces 6 located between the two cantilevers B. FIG. 3d shows a vertically aligned double-arm-type cantilever D which is constituted by one cantilever B as shown in FIG. 1e, one cantilever B as shown in FIG. 1g, and a plurality of reinforcing pieces 6 located between the two cantilevers B. FIG. 3e shows two types of vertically aligned double-arm-type cantilevers D which are respectively constituted by one cantilever B as shown in FIG. 1e, one cantilever B as shown in FIG. If, and a plurality of reinforcing pieces 6 located between the two cantilevers B, wherein first bending segments of the two cantilevers B are in contact with each other in one type (a position of the first bending segment of the lower cantilever is shown as the solid line in the enlarged view, referred to as closed double-arm-type cantilever) and spaced from each other in the other type (a position of the first bending segment of the lower cantilever is shown as the dotted line in the enlarged view, referred to as opened double-arm-type cantilever). FIG. 3f shows a vertically aligned double-arm-type cantilever D which is constituted by two cantilevers B as shown in FIG. 1h and a plurality of reinforcing pieces 6 located between the two cantilevers B. FIG. 3g shows a vertically aligned double-arm-type cantilever D which is constituted by two arc-shaped bending cantilevers as shown by the dotted line in FIG. 1d and a plurality of reinforcing pieces 6 located between the two cantilevers. FIG. 3h shows a vertically aligned double-arm-type cantilever D which is constituted by two bending cantilevers as shown by the solid line in FIG. 1d and a plurality of reinforcing pieces 6 located between the two cantilevers.

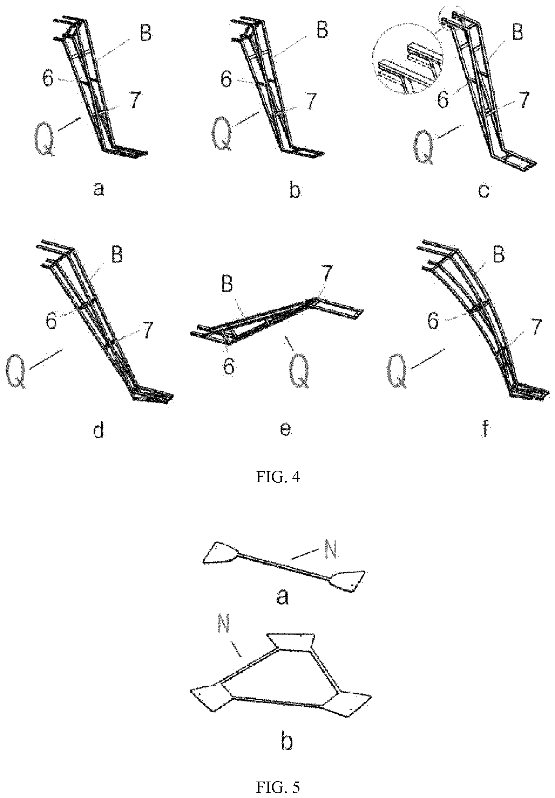

FIG. 4 shows seven types of four-arm-type cantilevers of the present invention. Wherein FIG. 4a shows a four-arm-type cantilever Q which is constituted by two double-arm-type cantilevers D as shown in FIG. 3a having different sizes and a plurality of reinforcing pieces 6 located between the two double-arm-type cantilevers D. FIG. 4b shows a four-arm-type cantilever Q which is constituted by two double-arm-type cantilevers D as shown in FIG. 3c and a plurality of reinforcing pieces 7 located between the two double-arm-type cantilevers D. FIG. 4c shows two types of four-arm-type cantilevers Q which is constituted by two double-arm-type cantilevers D as shown in FIG. 3e and a plurality of reinforcing pieces 7 located between the two double-arm-type cantilevers D, wherein one type is constituted by two closed double-arm-type cantilevers D (the first bending segment ofthe lower cantilever is shown by the solid line in the enlarged view, referred to as closed four-arm-type cantilever), and the other type is constituted by two opened double-arm-type cantilevers D (the first bending segment of the lower cantilever is shown by the dotted line in the enlarged view, referred to as opened four-arm-type cantilever). FIG. 4d shows a four-arm-type cantilevers Q which is constituted by two double-arm-type cantilevers D as shown in FIG. 3d and a plurality of reinforcing pieces 7 located between the two double-arm-type cantilevers D. FIG. 4e shows a four-arm-type cantilevers Q which is constituted by one double-arm-type cantilevers D as shown in FIG. 3a, one double-arm-type cantilevers D as shown in FIG. 3b without the reinforcing piece 7, and a plurality of reinforcing pieces 6 located between the two double-arm-type cantilevers D. FIG. 4f shows a four-arm-type cantilevers Q which is constituted by two double-arm-type cantilevers D as shown in FIG. 3f and a plurality of reinforcing pieces 7 located between the two double-arm-type cantilevers D.

FIG. 5 shows two types of baffle-tensile piece combined bodies N (i.e. including the structure adopted by the tensile piece) formed integrally by the baffle and the tensile piece. Wherein FIG. 5a shows a baffle-straight tensile piece combined body N (referred to simply as baffle-straight tensile piece combination) formed integrally by two baffles and the straight tensile piece. FIG. 5b shows a baffle-triangular tensile piece combined body N (referred to simply as baffle-angular tensile piece combination) formed integrally by three baffles and a triangular tensile piece.

Next, structures of the wheel frame of the present invention will be described.

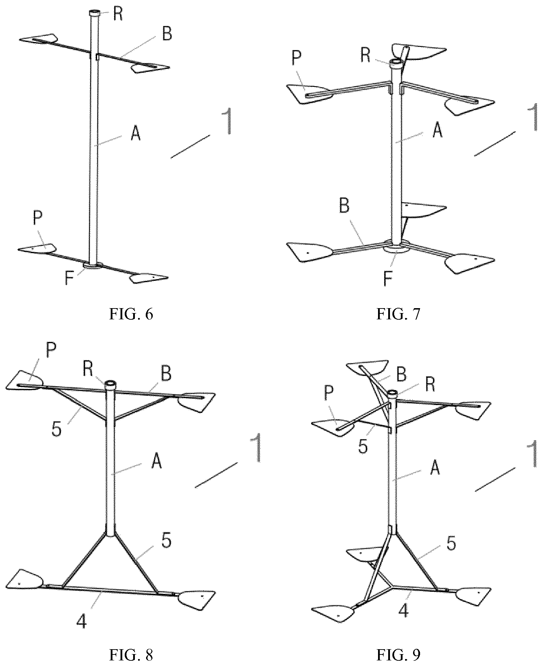

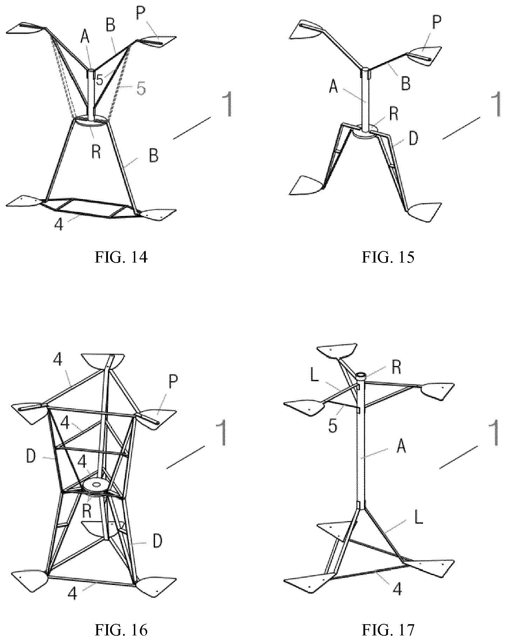

A first type of wheel frame includes the wheel axle (such as embodiment shown in FIG. 6). A second type of wheel frame does not include the wheel axle, and other features are identical to that of the first type of wheel frame (such as embodiment shown in FIG. 16).

A wheel frame 1 as shown in FIG. 6 includes a transmission body R with the vertical rotation axis as the center line, a wheel axle A fixedly connected to the transmission body R, a set of two straight cantilevers B (i.e. horizontal tensile pieces) as shown in FIG. 1a fixedly connected to the wheel axle A through a flange F, and a set of two straight cantilevers B (i.e. horizontal tensile pieces) as shown in FIG. 1b fixedly connected to the wheel axle A. The two sets are both two-fold rotationally symmetrical about the rotation axis. A total of four baffles in two sets are respectively mounted at ends of the two sets of cantilevers B close to an outer edge of the wind wheel in the radial direction (in the present embodiment, the baffles P are fixedly connected, however, the baffle P can also be rotatably connected according to needs). The cantilevers B are the blade supports.

A wheel frame 1 as shown in FIG. 7 includes a transmission body R with the vertical rotation axis as the center line, a wheel axle A fixedly connected to the transmission body R, a set of three straight cantilevers B (i.e. horizontal tensile pieces) as shown in FIG. 1a fixedly connected to the wheel axle A through a flange F, and another set of three straight cantilevers B (i.e. horizontal tensile pieces) as shown in FIG. 1b fixedly connected to the wheel axle A. The two sets are both three-fold rotationally symmetrical about the rotation axis. A total of six baffles P in two sets are respectively mounted at ends of two sets of cantilevers B close to an outer edge of the wind wheel in the radial direction. The cantilevers B are the blade supports.

A wheel frame 1 as shown in FIG. 8 includes a transmission body R with the vertical rotation axis as the center line, a wheel axle A fixedly connected to the transmission body R, a set of two straight cantilevers B (i.e. horizontal tensile pieces) as shown in FIG. 1b and two diagonal struts 5 (i.e. diagonal tensile pieces) which are fixedly connected to the wheel axle A, and a set of two diagonal struts 5 (i.e. horizontal tensile pieces) fixedly connected to the wheel axle A and with a straight tensile piece 4 connected therebetween. The two sets are both two-fold rotationally symmetrical about the rotation axis. A total of four baffles P in two sets are respectively mounted at ends of one set of cantilevers B and end of the tensile piece 4 which are close to an outer edge of the wind wheel in the radial direction. The tensile piece 4 and the cantilevers B are blade supports.

A wheel frame 1 as shown in FIG. 9 includes a transmission body R with the vertical rotation axis as the center line, a wheel axle A fixedly connected to the transmission body R, a set of three straight cantilevers B (i.e. horizontal tensile pieces) as shown in FIG. 1b and three diagonal struts 5 (i.e. diagonal tensile pieces) which are fixedly connected to the wheel axle A, and a set of three diagonal struts 5 (i.e. diagonal tensile pieces) fixedly connected to the wheel axle A and with a tensile piece 4 shaped like Y (a structure scattering from a center) connected therebetween. The two sets are both three-fold rotationally symmetrical about the rotation axis. A total of six baffles P in two sets are respectively mounted at ends of one set of cantilevers B and end of the tensile piece 4 which are close to an outer edge of the wind wheel in the radial direction. The tensile piece 4 and the cantilevers B are blade supports.

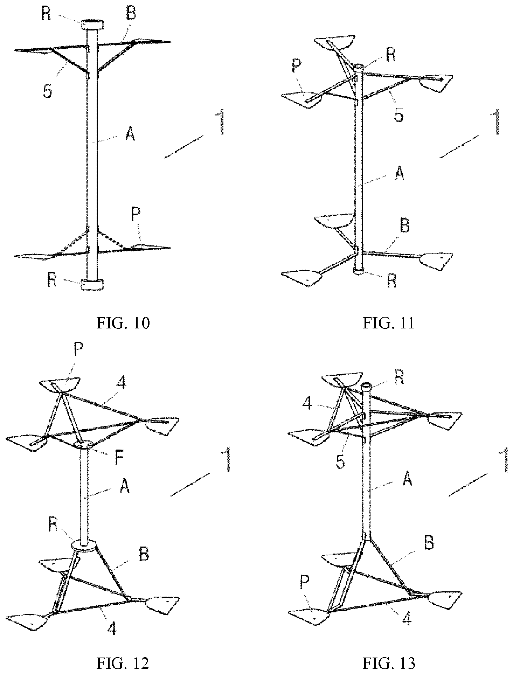

A wheel frame 1 as shown in FIG. 10 includes two transmission bodies R determining a rotation axis of the wheel frame, a wheel axle A fixedly connected to the two transmission bodies R, a set of two straight cantilevers B (i.e. horizontal tensile pieces) as shown in FIG. 1b and two diagonal struts 5 (i.e. diagonal tensile pieces) which are fixedly connected to the wheel axle A, and another set of two straight cantilevers B (i.e. horizontal tensile pieces) as shown in FIG. 1b fixedly connected to the wheel axle A (or further include two diagonal struts 5, i.e. diagonal tensile pieces, as shown with dotted lines). The two sets are both two-fold rotationally symmetrical about the rotation axis. A total of four baffles P in two sets are respectively mounted at ends of two sets of cantilevers B close to an outer edge of the wind wheel in the radial direction. The cantilevers B are blade supports.

A wheel frame 1 as shown in FIG. 11 includes two transmission bodies R determining a rotation axis of the wheel frame, a wheel axle A fixedly connected to the two transmission bodies R, a set of three straight cantilevers B (i.e. horizontal tensile pieces) as shown in FIG. 1b and three diagonal struts 5 (i.e. diagonal tensile pieces) which are fixedly connected to the wheel axle A, and another set of three straight cantilevers B (i.e. horizontal tensile pieces) as shown in FIG. 1b fixedly connected to the wheel axle A. The two sets are both three-fold rotationally symmetrical about the rotation axis. A total of six baffles P in two sets are respectively mounted at ends of two sets of cantilevers B close to an outer edge of the wind wheel in the radial direction. The cantilevers B are blade supports.

A wheel frame 1 as shown in FIG. 12 includes a transmission body R with the vertical rotation axis as the center line, a wheel axle A fixedly connected to the transmission body R, a set of three bending cantilevers B (i.e. diagonal tensile pieces) as shown in FIG. 1c fixedly connected to the wheel axle A via a flange F and with a triangular tensile piece 4 (polygonal structure) connected therebetween, and a set of three bending cantilevers B (i.e. diagonal tensile pieces) as shown in FIG. 1f fixedly connected to the transmission body R and with a triangular tensile piece 4 (polygonal structure) connected therebetween. The two sets are both three-fold rotationally symmetrical about the rotation axis. A total of six baffles P in two sets are respectively mounted at ends of two sets of cantilevers B close to an outer edge of the wind wheel in the radial direction. The cantilevers B are blade supports.

A wheel frame 1 as shown in FIG. 13 includes a transmission body R with the vertical rotation axis as the center line, a wheel axle A fixedly connected to the transmission body R, a set of three straight cantilevers B (i.e. horizontal tensile pieces) as shown in FIG. 1b and three diagonal struts (i.e. diagonal tensile pieces) which are fixedly connected to the wheel axle A, and a set of three bending cantilevers B (i.e. diagonal tensile pieces) as shown in FIG. 1d fixedly connected to the wheel axle A. The two sets are both three-fold rotationally symmetrical about the rotation axis. Respectively between the three straight cantilevers B and the three bending cantilevers B, respective triangular tensile piece 4 (polygonal structure) is connected. A total of six baffles P in two sets are respectively mounted at ends of two sets of cantilevers B close to an outer edge of the wind wheel in the radial direction. The cantilevers B are blade supports.

A wheel frame 1 as shown in FIG. 14 includes a transmission body R with the vertical rotation axis as the center line, a wheel axle A fixedly connected to the transmission body R, a set of two bending cantilevers B as shown in FIG. 1d and two diagonal struts 5 (both are diagonal tensile pieces) which are fixedly connected to the wheel axle A, and a set of two bending cantilevers B (i.e. diagonal tensile pieces) as shown in FIG. 1e fixedly connected to the transmission body R. The two sets are both two-fold rotationally symmetrical about the rotation axis. The diagonal strut 5 is connected between the upper cantilever B and the wheel axle A (or between the upper cantilever B and the transmission body R as shown with dotted line). A tensile piece 4 having two triangles at two ends and a rectangle in middle (special-shaped structure) is connected between the two lower cantilevers B. A total of four baffles P in two sets are respectively mounted at ends of two sets of cantilevers B close to an outer edge of the wind wheel in the radial direction. The cantilevers B are blade supports.

A wheel frame 1 as shown in FIG. 15 includes a transmission body R with the vertical rotation axis as the center line, a wheel axle A fixedly connected to the transmission body R, a set of two bending cantilevers B (i.e. diagonal tensile pieces) as shown in FIG. 1d fixedly connected to the wheel axle A, and a set of two opened double-arm-type cantilevers D (i.e. diagonal tensile pieces) as shown in FIG. 3d fixedly connected to the transmission body R. The two sets are both two-fold rotationally symmetrical about the rotation axis. The transmission body R is located in the openings. A total of four baffles P in two sets are respectively mounted at ends of the set of cantilevers B and ends of the set of double-arm-type cantilevers D which are close to an outer edge of the wind wheel in the radial direction. The cantilevers B and the double-arm-type cantilevers D are blade supports.

A wheel frame 1 as shown in FIG. 16 is the second type of wheel frame, including a two-layered transmission body R with the vertical rotation axis as the center line, a total of six closed double-arm-type cantilevers D (i.e. diagonal tensile pieces) as shown in FIG. 3d in two sets fixedly connected to the two-layered transmission body R. The two sets are both three-fold rotationally symmetrical about the rotation axis. Three triangular tensile pieces 4 (polygonal structure) are connected between three upper cantilevers D at different heights. One triangular tensile piece 4 is connected between three lower cantilevers D. A total of six baffles P in two sets are respectively mounted at ends of the two sets of double-arm-type cantilevers D close to an outer edge of the wind wheel in the radial direction. The double-arm-type cantilevers D are blade supports.

A wheel frame 1 as shown in FIG. 17 includes a transmission body R with the vertical rotation axis as the center line, a wheel axle A fixedly connected to the transmission body R, a set of three baffle-straight cantilever combinations L (i.e. including horizontal tensile pieces) as shown in FIG. 2a and three diagonal struts 5 (i.e. diagonal tensile pieces) which are fixedly connected to the wheel axle A, and a set of three baffle-bending cantilever combinations L which are similar to the baffle-bending cantilever combination L as shown in FIG. 2b except for having vertical mounting stems (i.e. diagonal tensile pieces) and fixedly connected to the wheel axle A. The two sets are both three-fold rotationally symmetrical about the rotation axis. A triangular tensile piece 4 (polygonal structure) is connected between the three baffle-bending cantilever combinations L. Two types of baffle-bending cantilever combined bodies L are blade supports.

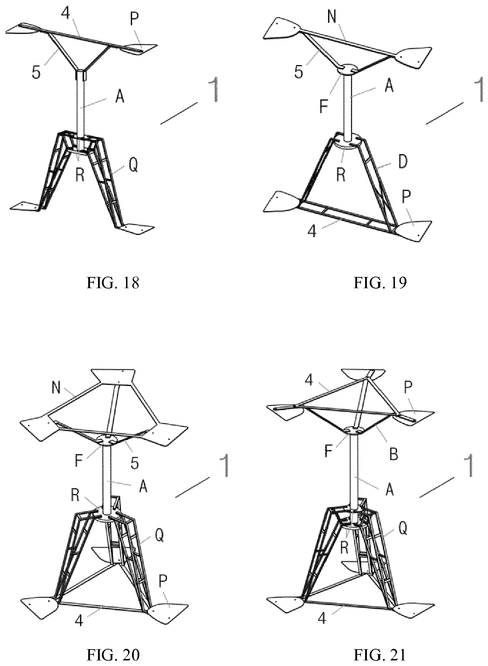

A wheel frame 1 as shown in FIG. 18 includes a two-layered transmission body R with a circular inner edge and a square outer edge and with the vertical rotation axis as the center line, a wheel axle A fixedly connected to the two-layered transmission body R, a set of two diagonal struts 5 (i.e. diagonal tensile pieces) fixedly connected to the wheel axle A and with a straight tensile piece 4 connected therebetween, and a set of two four-arm-type cantilevers Q (i.e. diagonal tensile pieces) as shown in FIG. 4a fixedly connected to the two-layered transmission body R. The two sets are both two-fold rotationally symmetrical about the rotation axis. A total of four baffles P in two sets are respectively mounted at two ends of the tensile piece 4 and ends of one set of four-arm-type cantilevers Q close to an outer edge of the wind wheel in the radial direction. The tensile piece 4 and the four-arm-type cantilevers Q are blade supports.

A wheel frame 1 as shown in FIG. 19 includes a transmission body R with the vertical rotation axis as the center line, a wheel axle A fixedly connected to the transmission body R, a set of two diagonal struts 5 (i.e. diagonal tensile pieces) fixedly connected to the wheel axle A via a flange F and with a baffle-straight tensile piece combination N (i.e. including a tensile piece) as shown in FIG. 5a connected therebetween, and a set of two double-arm-type cantilevers D (i.e. diagonal tensile pieces) as shown in FIG. 3b fixedly connected to the transmission body R and with two straight tensile pieces 4, between which bracing ribs are provided, located therebetween (special-shaped structure). The two sets are both two-fold rotationally symmetrical about the rotation axis. A total of two baffles P in one set are respectively mounted at ends of the two tensile pieces 4 close to an outer edge of the wind wheel in the radial direction. The baffle-tensile piece combined body N and the tensile pieces 4 are blade supports.

A wheel frame 1 as shown in FIG. 20 includes a transmission body R with the vertical rotation axis as the center line, a wheel axle A fixedly connected to the transmission body R, a set of three diagonal struts 5 (i.e. diagonal tensile pieces) fixedly connected to the wheel axle A via a flange F and with a baffle-angular tensile piece combination N (i.e. including a tensile piece) as shown in FIG. 5b connected therebetween, and a set of three closed four-arm-type cantilevers Q (i.e. diagonal tensile pieces) as shown in FIG. 4c fixedly connected to the transmission body R and with a triangular tensile piece 4 (polygonal structure) connected therebetween. The two sets are both three-fold rotationally symmetrical about the rotation axis. A total of three baffles P in one set are respectively mounted at ends of one set of four-arm-type cantilevers Q close to an outer edge of the wind wheel in the radial direction. The baffle-tensile piece combined body N and the four-arm-type cantilevers Q are blade supports.

A wheel frame 1 as shown in FIG. 21 includes a two-layered transmission body R with the vertical rotation axis as the center line, a wheel axle A fixedly connected to the transmission body R, a set of three bending cantilevers B (i.e. diagonal tensile pieces) as shown in FIG. 1c fixedly connected to the wheel axle A via a flange F and with a triangular tensile piece 4 (polygonal structure) connected therebetween, and a set of three four-arm-type cantilevers Q (i.e. diagonal tensile pieces) as shown in FIG. 4b fixedly connected to the two-layered transmission body R and with a triangular tensile piece 4 connected therebetween. The two sets are both three-fold rotationally symmetrical about the rotation axis. A total of six baffles P in two sets are respectively mounted at ends of one set of cantilevers B and ends of one set of four-arm-type cantilevers Q which are close to an outer edge of the wind wheel in the radial direction. The cantilevers B and the four-arm-type cantilevers Q are blade supports.

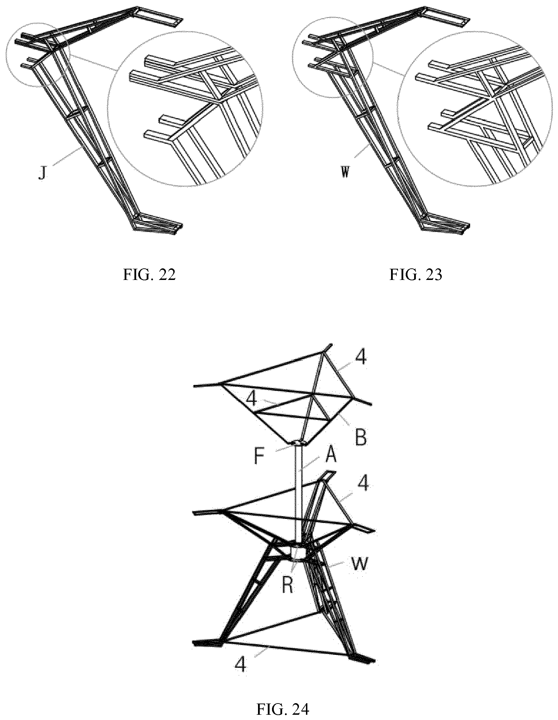

FIG. 22 shows a cantilever combination J combined by two types of four-arm-type cantilevers Q as shown in FIG. 4e and FIG. 4d.

FIG. 23 shows a cantilever combination W which is an isomeric configuration of the cantilever combination J as shown in FIG. 22 and is obtained by optimizing the cantilever combination W as shown in FIG. 22. Partial enlarged views in the FIG. 22 and FIG. 23 show the structural difference between the both. A pair of upper horizontal edge of the cantilever combination J is a structure overlapped by three pieces which is optimized in the cantilever combination W as a shared single piece structure with the lower horizontal piece extending outward to the upper and front diagonal rod. The beneficial effect of the cantilever combination W is that the outline of the cantilever combination J is maintained while the weight is decreased and the supporting strength is increased.

A wheel frame 1 as shown in FIG. 24 includes a two-layered sleeving transmission body R with the vertical rotation axis as the center line, a wheel axle A fixedly connected to the transmission body R, a set of three bending cantilevers B (i.e. diagonal tensile pieces) as shown in FIG. 1c fixedly connected to the wheel axle A via a flange F and with two triangular tensile pieces 4 (polygonal structures) connected therebetween, and a set of two cantilever combinations W as shown in FIG. 23 fixedly connected to the transmission body R and with two triangular tensile pieces 4 (polygonal structures) connected therebetween. The two sets are both three-fold rotationally symmetrical about the rotation axis.

Specific embodiments are described as below.

### Embodiment 1

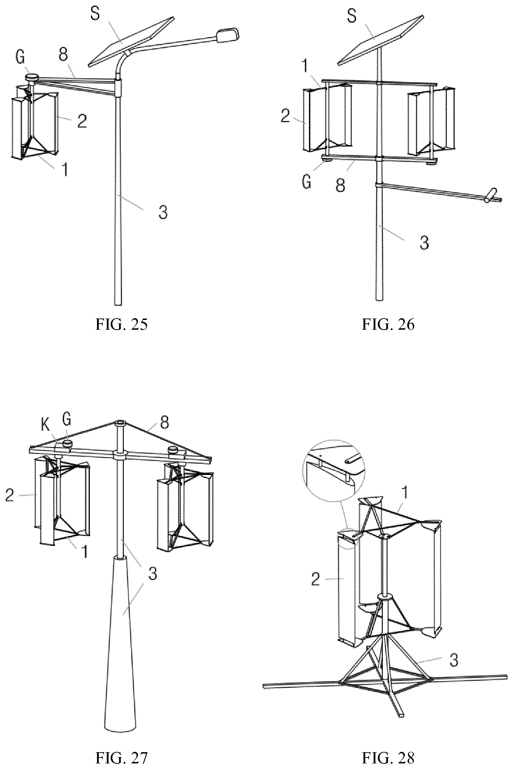

As shown in FIG. 25, the bearing body of the present embodiment includes an upright column 3 (such as a lamp-post) and a truss 8 fixedly connected to the upright column 3 and constituted by a cross-bar and a diagonal-bar. Three blades 2 are mounted at outer ends of blade supports of the wheel frame 1 as shown in FIG. 17 to form a three-blade wind wheel with blades 2 located between two sets of baffle-cantilever combined bodies L. The three-blade wind wheel is connected to an outer end of the truss 8 via the transmission body R on an upper end of the wheel axle A to form a vertical axis wind turbine with a pendulous wind wheel to drive an electric generator G, so as to form a wind-light hybrid power supply system together with a photovoltaic panel S. The present embodiment is suitable for places where the wind direction is relatively constant, such as streets with higher constructions located at both sides where the wind is blown along its direction.

### Embodiment 2

As shown in FIG. 26, the bearing body of the present embodiment includes an upright column 3 (such as monitoring post) and two cross-bars 8 rotatably connected to the upright column 3. Two blades 2 are mounted at outer ends of blade supports of the wheel frame 1 as shown in FIG. 10 to form a two-blade wind wheel with blades 2 located between two sets of baffles P. Two counter-rotating wind wheels formed by placing blades of one such wind wheel upside down with respect to blades of the other such wind wheel are respectively connected at two sides between the two cross-bars 8 via the transmission bodies R located at two ends of each wheel axle 8 to form a vertical axis wind turbine with two counter-rotating wind wheels to drive two electric generators G, so as to form a wind-light hybrid power supply system together with a photovoltaic panel S.

### Embodiment 3

As shown in FIG. 27, the bearing body ofthe present embodiment includes a tower, an upright column 3, and a truss 8 rotatably connected to an upper end of the upright column 3 and constituted by a cross-bar and a wirerope. Three blades 2 are mounted at outer ends of blade supports of the wheel frame 1 as shown in FIG. 13 to form a three-blade wind wheel with blades 2 located between two sets of baffles P. Two counter-rotating wind wheels formed by placing blades of one such wind wheel upside down with respect to blades of the other such wind wheel are respectively connected at two sides of the cross bar of the truss 8 via the transmission bodies R located at an upper end of each wheel axle A to form a vertical axis wind turbine with two counter-rotating wind wheels to drive two electric generators G via a gearbox K of each wind wheel.

### Embodiment 4

As shown in FIG. 28, the bearing body of the present embodiment is a tapered tower 3 with a cross-shaped seat. Three blades 2 are mounted at outer ends of blade supports of the wheel frame 1 as shown in FIG. 12 and located between two sets of baffles P without contact with the baffles P to form a three-blade wind wheel. The three-blade wind wheel is connected to the tower 3 via its transmission body R located at a lower end of the wheel axle A to form a vertical axis wind turbine. The partial enlarged view shows that a component is provided between the blade 2 and the baffle P to connect them. The component is protruded from the end of the blades 2 to contact the baffle and connect with the cantilever via the baffle, or the component is an independent component connecting the blade 2 with the baffle and is connected with the cantilever via the baffle. In the present embodiment, the blade does not contact the baffle. The wind turbine with such bearing body is suitable to be mounted on a top of a construction, because it has a cross-shaped seat long leg which is convenient to press weights and beneficial to fix the wind turbine.

### Embodiment 5

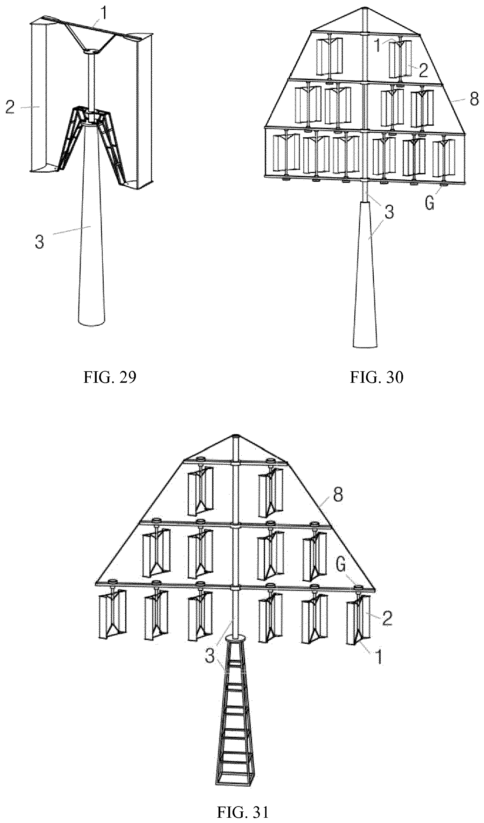

As shown in FIG. 29, the bearing body of the present embodiment is a barrel-shaped tower 3. The wheel frame 1 is similar as the wheel frame as shown in FIG. 18, except that the transmission body is in two-layered circular ring form. Two blades 2 are mounted at outer ends of the blade supports to form a two-blade wind wheel with blades 2 located between two sets of the baffles P. The two-blade wind wheel is connected to the tower 3 via the two-layered transmission body located at the lower end of its wheel axle to form a two-blade vertical axis wind turbine with excellent loading capability.

### Embodiment 6

As shown in FIG. 30, the bearing body of the present embodiment includes a barrel-shaped tower and upright column 3 and a truss 8 rotatably connected to the upright column 3 and constituted by four cross-bars and a wirerope. Two blades 2 are mounted at the outer ends of the blade supports of the wheel frame 1 as shown in FIG. 10 to form a two-blade wind wheel with blades 2 located between two sets of the baffles P. Two counter-rotating sets ofwind wheels formed by placing blades of half of twelve such wind wheels upside down with respect to blades of the other half of twelve such wind wheels are arranged at two sides of the upright column 3. The twelve wind wheels are respectively connected between four cross-bars in three layers of the truss 8 via two transmission bodies R located at two ends of respective wheel axle A, so as to form a vertical axis wind turbine with two counter-rotating sets of wind wheels hung at two sides of the upright column 3 to drive twelve electric generators G, thereby forming a tree-like wind electricity turbine set.

### Embodiment 7

As shown in FIG. 31, the bearing body of the present embodiment includes a frame-type tower and upright column 3 and a truss 8 rotatably connected to the upright column 3 and constituted by three cross-bars and a wirerope. Two blades 2 are mounted at the outer ends of the blade supports of the wheel frame 1 as shown in FIG. 8 to form a two-blade wind wheel with blades 2 located between two sets of the baffles P. Two counter-rotating sets ofwind wheels formed by placing blades of half of twelve such wind wheels upside down with respect to blades of the other half of twelve such wind wheels are arranged at two sides of the upright column 3. The twelve wind wheels are respectively connected below the three cross-bars of the truss 8 via a transmission body R located at the upper end of respective wheel axle A, so as to form a vertical axis wind turbine with two counter-rotating sets of wind wheels hung at two sides of the upright column 3 to drive twelve electric generators G, thereby forming a tree-like wind electricity turbine set.

### Embodiment 8

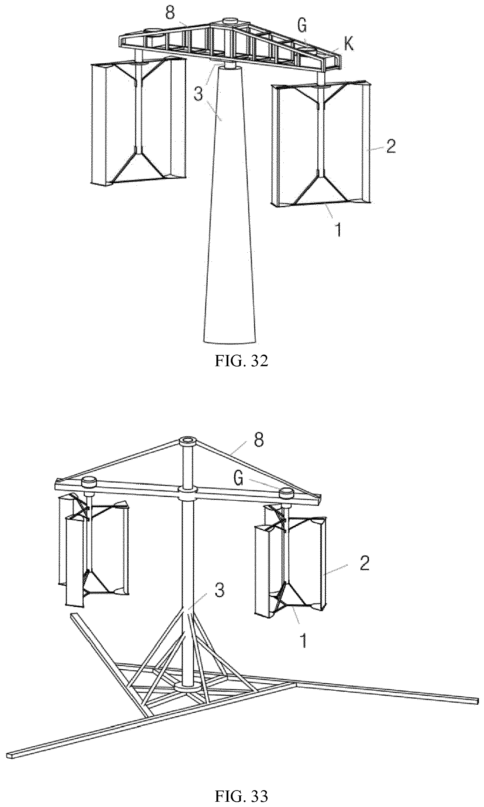

As shown in FIG. 32, the bearing body of the present embodiment includes a barrel-shaped tower and upright column 3 and a truss 8 rotatably connected to the upright column 3. Two blades 2 are mounted at the outer ends of the blade supports of the wheel frame 1 as shown in FIG. 8 to form a two-blade wind wheel with blades 2 located between two sets of the baffles P. Two counter-rotating wind wheels formed by placing blades of one such wind wheel upside down with respect to blades of the other such wind wheel are respectively connected at two sides of the truss 8 via the transmission body R located at the upper end of respective wheel axle A, so as to form a vertical axis wind turbine with two counter-rotating wind wheels. The vertical axis wind turbine drives two electric generators G via a gearbox K of each wind wheel.

### Embodiment 9

As shown in FIG. 33, the bearing body of the present embodiment includes a tapered tower with a long leg triangular seat, an upright column 3, and a truss 8 rotatably connected to the upper end of the upright column and constituted by a cross-bar and a wirerope. Three blades 2 are mounted at the outer ends of the blade supports of the wheel frame 1 as shown in FIG. 9 to form a three-blade wind wheel with blades 2 located between two sets of the baffles P. Two counter-rotating wind wheels formed by placing blades of one such wind wheel upside down with respect to blades of the other such wind wheel are respectively connected at two sides of the cross bar of the truss 8 via the transmission body R located at the upper end of respective wheel axle A, so as to form a vertical axis wind turbine with two counter-rotating wind wheels to drive two electric generators G. The wind turbine with such bearing body is convenient to be mounted on the ground or a top of a construction, because it has a triangular seat long leg which is convenient to fix or press weights and beneficial to fix the wind turbine.

### Embodiment 10

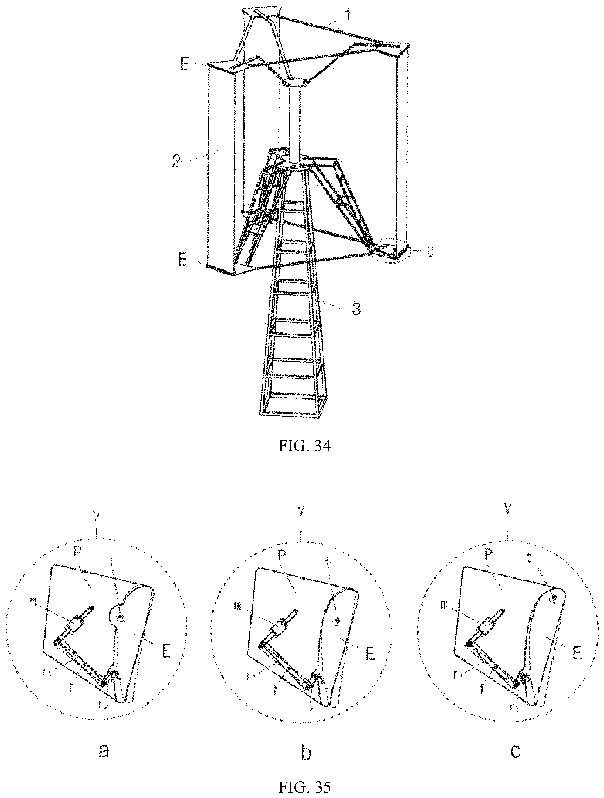

As shown in FIG. 34, the bearing body of the present embodiment is a frame type tower 3. The wheel frame 1 is substantially same as the wheel frame as shown in FIG. 20, except that it adopts the opened four-arm-type cantilever as shown in FIG. 4c with the transmission body located between the opening and adopts bending cantilevers as shown in FIG. 1c connected with the baffle-angular tensile piece combination N and a flange F. Three blades 2 are mounted between the baffle portion of the baffle-angular tensile piece combination N and one set of baffles P to form a three-blade wind wheel. The three-blade wind wheel is connected to the tower 3 via the transmission body located at lower end of the wheel axle thereof. The blades 2 are rotatably connected to the baffles. Two ends of each of three blades 2 are respectively fixedly connected to respective end plate E configured to connect the power control component located at each of three blades P and each of three baffle portions of the baffle-angular tensile piece combination N as shown in the partial view U, so as to form a three-blade vertical axis wind turbine having function of power controlling. FIG. 35 shows top views V illustrating three positions of mounting shaft t of the blade 2 as shown in partial view in FIG. 34. The end plate E has a streamlined outline and is rotatably connected to the baffle P (or the baffle portion of the baffle-angular tensile piece combination N) via the mounting shaft t. The connecting hole of the end plate E is connected to an output of a stretching controller m via connecting rods r1, r2 in a in transmission way, and the connecting rod r1 has a fulcrum f. When a stretching is occurred under electrical control of the controller m, the blade 2 can be driven by the end plate E to rotate about the mounting shaft t, so as to change a mounting angle of the blade 2 to control power of the wind turbine. When the controller m is an elastomer, the stretching generated by interaction between centrifugal force generated by rotation of the blade 2 and elastic force of the controller m can drive the blade 2 via the end plate E to rotate about the mounting shaft t, so as to change the mounting angle of the blade 2 to control power of the wind turbine. In the present invention, end plates E at two ends of the blade 2 can also be removed, and the relevant components of the controller can be directly connected to corresponding portion at two ends of the blade 2. That is, the end plate E can also be included in the blade 2 to form a new type of blade 2' rotatable about the mounting shaft t, which can also realize the above power control.

### Embodiment 11

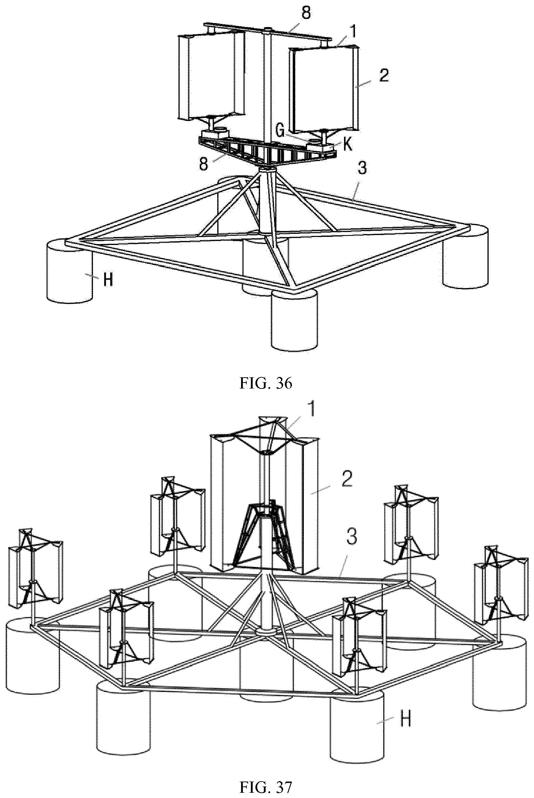

As shown in FIG. 36, the present embodiment relates to a floating type vertical axis wind turbine, the bearing body of which includes a structure body 3 formed by an a tapered tower with a rectangular seat supported by five pontoons H in water and an upright column, and a cross-bar 8 and a truss 8 rotatably connected to the upright column of the structure body 3. The wind wheel adopts a wheel frame 1 without wheel axle or with a short wheel axle. Two blades 2 are mounted at outer ends of blade supports of the wheel frame 1 to form a two-blade wind wheel with blades 2 located between two sets of baffles P. Two counter-rotating wind wheels formed by placing blades of one such wind wheel upside down with respect to blades of the other such wind wheel are respectively connected at two sides between the cross-bar 8 and truss 8 via respective two transmission bodies R located at two ends of wheel axle A to form a vertical axis wind turbine with two counter-rotating wind wheels. The vertical axis wind turbine drives two electric generators G via a gearbox K of respective wind wheel.

### Embodiment 12

As shown in FIG. 37, the present embodiment relates to a floating type wind turbine, the bearing body of which is a structure body 3 having a hexagonal seat and seven upright columns supported by seven buoys H. Three blades 2 are mounted at outer ends of the blade supports of the wheel frame 1 as shown in FIG. 21 to form a three-blade wind wheel with blades 2 located between two sets of baffles P, and the three-blade wind wheel is connected on the centric upright column of the structure body 3 via the two-layered transmission body R located at the lower end of the wheel axle A. Three blades 2 are mounted at outer ends of the blade supports of each of six wheel frames 1 as shown in FIG. 12 to form three-blade wind wheels with blades 2 located between two sets of baffles P, and the three-blade wind wheels are connected on the upright columns at six angles of the structure body 3 via the transmission body R located at the lower end of respective wheel axle A. A floating integrated type wind turbine with seven wind turbines is obtained.

### Embodiment 13

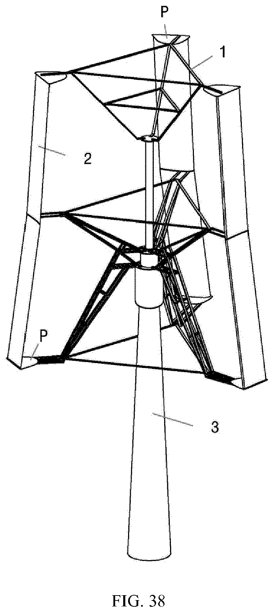

As shown in FIG. 38, the bearing body of the present embodiment is a barrel-shaped tower 3. A total of six baffles P in two sets are mounted at outer ends of horizontal segments of two sets (an upper set and a lower set) of cantilevers. Three blades 2 are mounted between the corresponding upper and lower baffles P. Each blade has two segments respectively mounted between an upper cantilever and an intermediate cantilever and between the intermediate cantilever and a lower cantilever. A radial length of the lower cantilever is slightly larger than a radial length of the intermediate cantilever, and the radial length of the intermediate cantilever is slightly larger than a radial length of the upper cantilever, so that when the two segments of each blade 2 are respectively mounted between the upper cantilever and the intermediate cantilever and between the intermediate cantilever and the lower cantilever, two angles corresponding to two segments, which may be different or same, inclined upward and outward are generated. The wheel frame 1 is rotatably connected at a top end of the tower 3, so as to form a three-blade vertical axis wind turbine with baffles, which has excellent loading capability.

### Embodiment 14

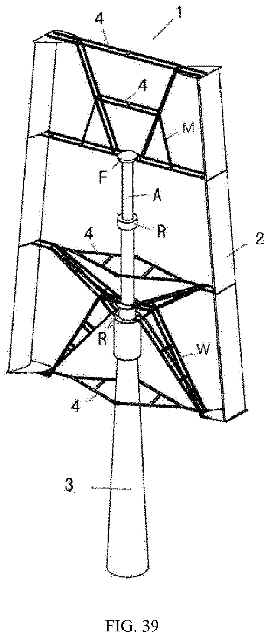

As shown in FIG. 39, the bearing body of the present embodiment includes a barrel-shaped tower 3 and an upright column fixedly connected on a top end thereof. The wheel frame 1 includes a two-layered sleeving transmission body R rotatably connected to the lower end of the upright column, a transmission body R rotatably connected to the upper end of the upright column, and a wheel axle A down through the upright column from the transmission body R of the upper end and inserted into the tower 3 to drive the electric generator. An overlying cantilever combination M includes two sets of double-arm-type cantilever D as shown in FIG. 3a symmetrically and fixedly connected on the flange F and two sets of double straight tensile pieces 4 clamping a connection rid symmetrically and fixedly connected on the flange F. A reinforcing rib is connected between adjacent double-arm-type cantilever D and double straight tensile pieces 4 clamping a connection rid. Another two sets of double straight tensile pieces 4 clamping a connection rid are connected between the two sets of double-arm-type cantilever D. The flange F is fixedly connected at the top end of the wheel axle A. The underlying cantilever combination includes two sets of cantilever combinations W as shown in FIG. 23 symmetrically and fixedly connected on the transmission body R at upper ends and two rhombic tensile pieces 4 connected to the two sets of cantilever combinations W, wherein the rhombic tensile piece 4 has two connection rods respectively connected to the outside of two acute angles thereof (special-shaped structure). Two blades 2 are mounted between the overlying cantilever combination M and the underlying cantilever combination W to form a two-blade wind wheel rotatably connected to the top end of the tower 3. Each blade has three segments respectively mounted at blade connection ends of the overlying cantilever combination M, between the overlying and underlying cantilever combinations, and of the underlying cantilever combination W. A radial length between the overlying cantilever combination M and the underlying cantilever combination W is gradually increased from top to bottom, so that the blade 2 forms an angle inclined downward and outward to form a two-blade vertical axis wind turbine with baffle, which has excellent loading capability.

All the embodiments as shown in FIG. 26, FIG. 27, FIGs. 30 to 33, FIG. 36 relate to the wind turbine having two wind wheels or two sets of multi-wind wheels with opposite rotation directions which are located on the cross-bar or the truss rotatable about the upright column and which are mounted at two sides of the upright column, it has the function to enable the vertical plane which is parallel to the cross-bar or the truss to be perpendicular to the wind direction automatically, the principal of which is that if the wind wheels with opposite rotation directions at two sides of the cross-bar or the truss is rotated, then torques about the upright column with opposite directions would be generated, when the wind direction is not perpendicular to the vertical plane, the torque about the upright column generated by the wind wheel at upstream in the wind direction is greater than the torque generated by the wind wheel at downstream in the wind direction, so that the cross-bar or the truss is driven to rotate about the upright column, which only would be stopped until arriving at the position where the torques generated by the wind wheels at the two sides are equal to each other, i.e. the position where the wind direction is perpendicular to the vertical plane. It has the beneficial effects that the wind wheel can automatically avoid the upright column at the windward plane, and the two wind wheels can maintain maximal utilization efficiency to wind energy. In the embodiments as shown in FIG. 29, FIG. 34, and FIG. 37 and wheel frames as shown in FIG. 15, FIG. 16, and FIGs. 18 to 21, the double-arm-type or four-arm-type cantilever, the short wheel axle, and the wheel frame provided with the tensile piece are included. This type of wheel frame has the beneficial effects that a rigidity and a loading capability of the wheel frame is increased, a center of gravity of the wind wheel is descended, and requirements of centrifugal load to strengths of the diagonal strut and the cantilever is decreased, so that the technical bottleneck in developing large-scale vertical axis wind turbine with high performance is broken. In the embodiment as shown in FIG. 37, a floating integrated type wind turbine adopts a plurality of wind turbines to increase power capacity of system without increasing height of system, which has the beneficial effects that not only the power of the system is increased and requirements of the floating platform to have low center of gravity is satisfied, but the cost of high power wind turbine to utilize high quality wind energy above water is decreased.

The wheel frame of the present invention is not limited to the above described. Some components of the wheel frames as shown in FIGs. 6 to 21 can be exchanged to form new wheel frames. For example, the components above the top end of the wheel axle A can be exchanged between wheel frames 1 as shown in FIG. 18 and FIG. 19, FIG. 20 and FIG. 21 so as to form four new wheel frames. Some structures can also be transplanted to form new wheel frames or new components. For example, to form a new wheel frame capable of mounting three blades, the cantilevers B, the cantilevers D, and their blades in the wheel frame as shown in FIG.15 can be configured to be three-fold rotationally symmetrical about the rotation axis, one triangular tensile piece 4 can be connected between three cantilevers B, and two triangular tensile pieces 4 can be connected between three cantilevers D. For another example, to form a new wheel frame like the type as shown in FIG. 16 but is two-fold rotationally symmetrical, the wheel axle A and the cantilevers B can be removed from the wheel frame 1 as shown in FIG. 15, and the cantilevers D can be project upward with a plane where the circular plane of the transmission body R is located as the cardinal plane. For another example, to form some new wheel frames, the arc-shaped cantilevers B shown with dotted lines in FIG. 1c and d can be used to replace corresponding bending cantilevers B in some wheel frames as described above. The vertical axis wind turbine of the present invention is not limited to the above described embodiments. For example, a wind wheel formed by mounting blades on the above new wheel frames can be combined with the above bearing bodies to form new embodiments. For another embodiment, the symmetrical and compatible wind wheels and bearing bodies 3 in the embodiments as shown in FIG. 25 to FIG. 37 can be exchanged to from new embodiment. The list could go on and on. The embodiments of the present invention relates to two-blade and three-blade wind turbines, however, the blade supports of the present invention can arranged to be four-fold rotationally symmetrical about the vertical rotation axis, five-fold rotationally symmetrical about the vertical rotation axis, and so on. Wind turbines with such as four-blade and five-blade wind wheels can also be formed based on the above structures of the present invention. The present invention can also have other embodiments in addition to the above-mentioned embodiments. Any technical solution based on equal substitution or equivalent transform all falls within the extent of protection the present invention requires.

What described above are several embodiments of the present invention, they are relatively concrete and detailed, but they are not intended to limit the scope of the present invention. It will be understood by those skilled in the art that various modifications and improvements can be made without departing from the conception of the present invention, and all these modifications and improvements are within the scope of the present invention. The scope of the present invention shall be subject to the claims attached.

## Claims

1. A vertical axis wind turbine with its blade support shielded, comprising a wind wheel rotatable about a vertical rotation axis and a bearing body determining the vertical rotation axis, the wind wheel comprising a wheel frame and blades distributed at a periphery of the wheel frame, the wheel frame being rotatably connected to the bearing body, **characterized in that**, an upper portion and a lower portion of the wheel frame are respectively provided with one set of blade supports, a tail section or a tail end of each of the blade supports away from the vertical rotation axis is respectively connected with a baffle; the baffle is located between the tail section of respective blade support and respective blade, or an edge of the baffle is integrated with the tail end of respective blade support; the baffle on the upper portion of the wheel frame vertically corresponds to the respective baffle on the lower portion of the wheel frame, a respective blade is connected between the corresponding baffles; two ends of the blade are connected to the corresponding baffles directly or via connecting pieces.

2. The vertical axis wind turbine with its blade support shielded of claim 1, **characterized in that**, a projected dimension of the baffle on a plane perpendicular to the vertical rotation axis satisfies: a maximum size in a radial direction of the wind wheel is 0.15 times to 0.85 times a radius of the wind wheel, and a maximum size in a direction perpendicular to the radial direction of the wind wheel is 0.7 times to 1.3 times a projected chord length of an end face of the blade on a baffle plane.

3. The vertical axis wind turbine with its blade support shielded of claim 2, **characterized in that**, the wheel frame comprises an upper connection portion and a lower connection portion, or comprises an upper connection portion, an intermediate connection portion, and a lower connection portion; the upper connection portion and the lower connection portion of the wheel frame are respectively provided with the blade support, the blade support of the upper connection portion is connected to an upper end of the blade via the baffle, the intermediate connection portion is connected to an intermediate portion of the blade, and the blade support of the lower connection portion is connected to a lower end of the blade via the baffle.

4. The vertical axis wind turbine with its blade support shielded of claim 3, **characterized in that**, a radial length of the blade support of the upper connection portion is equal to or different from a radial length of the blade support of the lower connection portion, and the blade is connected between the upper connection portion and the lower connection portion vertically or at an angle inclined relative to a vertical direction.

5. The vertical axis wind turbine with its blade support shielded of claim 3, **characterized in that**, the lower connection portion is at least two-fold rotationally symmetrical about the vertical rotation axis; the lower connection portion is shaped as a triangle or a trapezoid or a taper or a frustum, the taper is a pyramid or a cone, the frustum is a frustum of a pyramid or a cone, and a vertex of the triangle or the taper, or a base edge of the trapezoid having a shorter length, or a base face of the frustum having a smaller area forms a part of the lower connection portion that is close to the upper connection portion.

6. The vertical axis wind turbine with its blade support shielded of claim 5, **characterized in that**, the lower connection portion adopts one of a first configuration, a second configuration, a third configuration, and a fourth configuration;
in the first configuration: the wheel frame further comprises a wheel axle with the vertical rotation axis as a center line; a lower end of the wheel axle and the lower connection portion are directly fixedly connected, or coaxially fixedly connected with a flange or a transmission body, or coaxially sleeved with a transmission body; an upper end of the wheel axle and the upper connection portion are directly fixedly connected, or coaxially fixedly connected with a flange or a transmission body, or coaxially sleeved with a transmission body; when the lower end of the wheel axle and the lower connection portion are directly fixedly connected, or coaxially fixedly connected with the flange, or coaxially sleeved with the transmission body, the upper end of the wheel axle is coaxially fixedly connected to a transmission body; when the upper end of the wheel axle and the upper connection portion are directly fixedly connected, or coaxially fixedly connected with the flange, or coaxially sleeved with the transmission body, the lower end of the wheel axle is coaxially fixedly connected to a transmission body; the transmission body is rotatably connected to the bearing body;
the lower connection portion comprises a cantilever for the vertical axis wind turbine and a tensile piece, when the lower end of the wheel axle is directly fixedly connected to the lower connection portion, a support connection end of the cantilever for the vertical axis wind turbine is connected to the lower end of the wheel axle directly or via a connection segment; when the lower end of the wheel axle is coaxially fixedly connected with the flange or the transmission body, the support connection end ofthe cantilever for the vertical axis wind turbine is connected to the flange or the transmission body directly or via a connection segment;
a blade connection end of the cantilever for the vertical axis wind turbine is fixedly connected to the tensile piece, and a tail end of the tensile piece away from the vertical rotation axis is connected to the blade via the baffle; or the blade connection end of the cantilever for the vertical axis wind turbine is connected to the blade via the baffle, and the tail end of the tensile piece is fixedly connected to the cantilever for the vertical axis wind turbine;
the cantilever for the vertical axis wind turbine constitutes a side edge of a shape of the lower connection portion, and the tensile piece constitutes or is parallel to a lower base edge or a lower base face of the shape of the lower connection portion;
in the second configuration: the wheel frame further comprises a wheel axle with the vertical rotation axis as a center line, a lower end of the wheel axle and the lower connection portion are directly fixedly connected, or coaxially fixedly connected with a flange or a transmission body, or coaxially sleeved with a transmission body; an upper end of the wheel axle and the upper connection portion are directly fixedly connected, or coaxially fixedly connected with a flange or a transmission body, or coaxially sleeved with a transmission body; when the lower end of the wheel axle and the lower connection portion are directly fixedly connected, or coaxially fixedly connected with the flange, or coaxially sleeved with the transmission body, the upper end of the wheel axle is coaxially fixedly connected to a transmission body; when the upper end of the wheel axle and the upper connection portion are directly fixedly connected, or coaxially fixedly connected with the flange, or coaxially sleeved with the transmission body, the lower end of the wheel axle is coaxially fixedly connected to a transmission body; the transmission body is rotatably connected to the bearing body;
the lower connection portion comprises a cantilever for the vertical axis wind turbine, when the lower end of the wheel axle is directly fixedly connected to the lower connection portion, a support connection end of the cantilever for the vertical axis wind turbine is connected to the lower end of the wheel axle directly or via a connection segment, when the lower end of the wheel axle is coaxially fixedly connected with the flange or the transmission body, the support connection end of the cantilever for the vertical axis wind turbine is connected to the flange or the transmission body directly or via a connection segment; a blade connection end of the cantilever for the vertical axis wind turbine is connected to the blade via the baffle; the cantilever for the vertical axis wind turbine constitutes a side edge of a shape of the lower connection portion;
in the third configuration: the wheel frame further comprises a transmission body rotatably connected to the bearing body;
the lower connection portion comprises a cantilever for the vertical axis wind turbine and a tensile piece, a support connection end of the cantilever for the vertical axis wind turbine is connected to the transmission body directly or via a connection segment;
a blade connection end of the cantilever for the vertical axis wind turbine is fixedly connected to the tensile piece, and a tail end of the tensile piece away from the vertical rotation axis is connected to the blade via the baffle; or the blade connection end of the cantilever for the vertical axis wind turbine is connected to the blade via the baffle, and the tail end of the tensile piece is fixedly connected to the cantilever for the vertical axis wind turbine;
the cantilever for the vertical axis wind turbine constitutes a side edge of a shape of the lower connection portion, and the tensile piece constitutes or is parallel to a lower base edge or a lower base face of the shape of the lower connection portion;
in the fourth configuration: the wheel frame further comprises a transmission body rotatably connected to the bearing body;
the lower connection portion comprises a cantilever for the vertical axis wind turbine, a support connection end of the cantilever for the vertical axis wind turbine is connected to the transmission body directly or via a connection segment, a blade connection end of the cantilever for the vertical axis wind turbine is connected to the blade via the baffle, the cantilever for the vertical axis wind turbine constitutes a side edge of a shape of the lower connection portion.

7. The vertical axis wind turbine with its blade support shielded of claim 3, **characterized in that**, the upper connection portion is at least two-fold rotationally symmetrical about the vertical rotation axis; the upper connection portion is shaped as a triangle or a trapezoid or a taper or a frustum, the taper is a pyramid or a cone, the frustum is a frustum of a pyramid or a cone, a vertex of the triangle or the taper, or a base edge of the trapezoid having a shorter length, or a base face of the frustum having a smaller area forms a part of the upper connection portion that is close to the lower connection portion.

8. The vertical axis wind turbine with its blade support shielded of claim 7, **characterized in that**, the upper connection portion adopts one of a fifth configuration, a sixth configuration, a seventh configuration, and an eighth configuration;
in the fifth configuration: the wheel frame further comprises a wheel axle with the vertical rotation axis as a center line, an upper end of the wheel axle and the upper connection portion are directly fixedly connected, or coaxially fixedly connected with a flange or a transmission body, or coaxially sleeved with a transmission body; a lower end of the wheel axle and the lower connection portion are directly fixedly connected, or coaxially fixedly connected with a flange or a transmission body, or coaxially sleeved with a transmission body; when the upper end of the wheel axle and the upper connection portion are directly fixedly connected, or coaxially fixedly connected with the flange, or coaxially sleeved with the transmission body, the lower end of the wheel axle is coaxially fixedly connected to a transmission body, when the lower end of the wheel axle and the lower connection portion are directly fixedly connected, or coaxially fixedly connected with the flange, or coaxially sleeved with the transmission body, the upper end of the wheel axle is coaxially fixedly connected to a transmission body, the transmission body is rotatably connected to the bearing body;
the upper connection portion comprises a cantilever for the vertical axis wind turbine and a tensile piece, or comprises a diagonal tensile piece and a tensile piece; when the upper end of the wheel axle is directly fixedly connected to the upper connection portion, a lower end of the diagonal tensile piece is fixedly connected to the upper end of the wheel axle, or a support connection end of the cantilever for the vertical axis wind turbine is connected to the upper end of the wheel axle directly or via a connection segment; when the upper end of the wheel axle is coaxially fixedly connected with the flange or the transmission body, the lower end of the diagonal tensile piece is fixedly connected to the flange or the transmission body, or the support connection end of the cantilever for the vertical axis wind turbine is connected to the flange or the transmission body directly or via a connection segment;
the upper end of the diagonal tensile piece or a blade connection end of the cantilever for the vertical axis wind turbine is fixedly connected to the tensile piece, and a tail end of the tensile piece away from the vertical rotation axis is connected to the blade directly via the baffle; or the upper end of the diagonal tensile piece is connected to the blade via the baffle, or the blade connection end of the cantilever for the vertical axis wind turbine is connected to the blade via the baffle, and the tail end of the tensile piece is fixedly connected to diagonal tensile piece;
the diagonal tensile piece or the cantilever for the vertical axis wind turbine constitutes a side edge of a shape of the upper connection portion, the tensile piece constitutes or is parallel to an upper base edge or an upper base face of a shape of the upper connection portion;
in the sixth configuration: the wheel frame further comprises a wheel axle with the vertical rotation axis as a center line, an upper end of the wheel axle and the upper connection portion are directly fixedly connected, or coaxially fixedly connected with a flange or a transmission body, or coaxially sleeved with a transmission body; a lower end of the wheel axle and the lower connection portion are directly fixedly connected, or coaxially fixedly connected with a flange or a transmission body, or coaxially sleeved with a transmission body; when the upper end of the wheel axle and the upper connection portion are directly fixedly connected, or coaxially fixedly connected with the flange, or coaxially sleeved with the transmission body, the lower end of the wheel axle is coaxially fixedly connected to a transmission body; when the lower end of the wheel axle and the lower connection portion are directly fixedly connected, or coaxially fixedly connected with the flange, or coaxially sleeved with the transmission body, the upper end of the wheel axle is coaxially fixedly connected to a transmission body, the transmission body is rotatably connected to the bearing body;
the upper connection portion comprises a diagonal tensile piece or a cantilever for the vertical axis wind turbine, when the upper end of the wheel axle is fixedly connected to the upper connection portion, a lower end of the diagonal tensile piece is fixedly connected to the upper end of the wheel axle, or a support connection end of the cantilever for the vertical axis wind turbine is connected to the upper end of the wheel axle directly or via a connection segment; when the upper end of the wheel axle is coaxially fixedly connected with the flange or the transmission body, the lower end of the diagonal tensile piece is fixedly connected to the flange or the transmission body, or the support connection end of the cantilever for the vertical axis wind turbine is connected to the flange or the transmission body directly or via a connection segment; an upper end of the diagonal tensile piece is connected to the blade via the baffle, or the support connection end of the cantilever for the vertical axis wind turbine is connected to the blade via the baffle; the diagonal tensile piece or the cantilever for the vertical axis wind turbine constitutes a side edge of a shape of the upper connection portion;
in the seventh configuration: the wheel frame further comprises a transmission body rotatably connected to the bearing body;
the upper connection portion comprises a cantilever for the vertical axis wind turbine and a tensile piece, or comprises a diagonal tensile piece and a tensile piece; a lower end of the diagonal tensile piece is fixedly connected to the transmission body, or a support connection end of the cantilever for the vertical axis wind turbine is connected to the transmission body directly or via a connection segment;
an upper end of the diagonal tensile piece or a blade connection end of the cantilever for the vertical axis wind turbine is fixedly connected to the tensile piece, and a tail end of the tensile piece away from the vertical rotation axis is connected to the blade via the baffle; Or the upper end of the diagonal tensile piece is connected to the blade via the baffle, or the blade connection end of the cantilever for the vertical axis wind turbine is connected to the blade via the baffle, and the tail end of the tensile piece is fixedly connected to the diagonal tensile piece;
the diagonal tensile piece or the cantilever for the vertical axis wind turbine constitutes a side edge of a shape of the upper connection portion, and the tensile piece constitutes or is parallel to an upper base edge or an upper base face of a shape of the upper connection portion;
in the eighth configuration: the wheel frame further comprises a transmission body rotatably connected to the bearing body;
the upper connection portion comprises a diagonal tensile piece and a cantilever for the vertical axis wind turbine, a lower end of the diagonal tensile piece is fixedly connected to the transmission body, or a support connection end of the cantilever for the vertical axis wind turbine is connected to the transmission body directly or via a connection segment, an upper end of the diagonal tensile piece is connected to the blade via the baffle, or a blade connection end of the cantilever for the vertical axis wind turbine is connected to the blade via the baffle; the diagonal tensile piece or the cantilever for the vertical axis wind turbine constitutes a side edge of a shape of the upper connection portion.

9. The vertical axis wind turbine with its blade support shielded of claim 3, **characterized in that**, the intermediate connection portion is at least two-fold rotationally symmetrical about the vertical rotation axis; the intermediate connection portion is shaped as a triangle or a trapezoid or a taper or a frustum, the taper is a pyramid or a cone, the frustum is a frustum of a pyramid or a cone, a vertex of the triangle or the taper, or a base edge of the trapezoid having a shorter length, or a base face of the frustum having a smaller area forms a part of the intermediate connection portion that is close to the lower or upper connection portion.

10. The vertical axis wind turbine with its blade support shielded of claim 9, **characterized in that**, the intermediate connection portion adopts one of a ninth configuration, a tenth configuration, and an eleventh configuration;
in the ninth configuration, the wheel frame further comprises a wheel axle with the vertical rotation axis as a center line; a lower end of the wheel axle and the lower connection portion are directly fixedly connected, or coaxially fixedly connected with a flange or a transmission body, or coaxially sleeved with a transmission body; an upper end of the wheel axle and the upper connection portion are directly fixedly connected, or coaxially fixedly connected with a flange or a transmission body, or coaxially sleeved with a transmission body; when the lower end of the wheel axle and the lower connection portion are directly fixedly connected, or coaxially fixedly connected with the flange, or coaxially sleeved with the transmission body, the upper end of the wheel axle is coaxially fixedly connected to a transmission body; when the upper end of the wheel axle and the upper connection portion are directly fixedly connected, or coaxially fixedly connected with the flange, or coaxially sleeved with the transmission body, the lower end of the wheel axle is coaxially fixedly connected to a transmission body; the transmission body is rotatably connected to the bearing body;
the intermediate connection portion comprises a cantilever for the vertical axis wind turbine and a tensile piece; there is at least one intermediate connection portion, each of intermediate connection portion is respectively located at the upper end of the wheel axle, at the lower end of the wheel axle, or between the upper and lower ends of the wheel axle;
when the intermediate connection portion is located at the upper end of the wheel axle, if the upper end of the wheel axle is directly fixedly connected to the intermediate connection portion, then a support connection end of the cantilever for the vertical axis wind turbine is connected to the upper end of the wheel axle directly or via a connection segment; if the upper end of the wheel axle is coaxially fixedly connected with a flange or a transmission body or is coaxially sleeved with a transmission body, then the support connection end of the cantilever for the vertical axis wind turbine is connected to the flange or the transmission body directly or via a connection segment;
when the intermediate connection portion is located at the lower end of the wheel axle, if the lower end of the wheel axle is directly fixedly connected to the intermediate connection portion, then the support connection end of the cantilever for the vertical axis wind turbine is connected to the lower end of the wheel axle directly or via a connection segment; if the lower end of the wheel axle is coaxially fixedly connected with a flange or a transmission body or is coaxially sleeved with a transmission body, then the support connection end of the cantilever for the vertical axis wind turbine is connected to the flange or the transmission body directly or via a connection segment;
when the intermediate connection portion is located between the upper and lower ends of the wheel axle, the support connection end of the cantilever for the vertical axis wind turbine is connected to the wheel axle directly or via a connection segment, or the support connection end of the cantilever for the vertical axis wind turbine is connected to the flange or the transmission body directly or via a connection segment;
a blade connection of the cantilever for the vertical axis wind turbine is fixedly connected to the tensile piece, a tail end of the tensile piece away from the vertical rotation axis is connected to the blade directly or via the baffle; or the blade connection of the cantilever for the vertical axis wind turbine is connected to the blade directly or via a connection portion or a connecting piece, and the tail end of the tensile piece is fixedly connected to the cantilever for the vertical axis wind turbine;
the cantilever for the vertical axis wind turbine constitutes a side edge of a shape of the intermediate connection portion, and the tensile piece constitutes or is parallel to a base edge or a base face of the shape of the intermediate connection portion;
in the tenth configuration, the wheel frame further comprises a wheel axle with the vertical rotation axis as a center line, a lower end of the wheel axle and the lower connection portion are directly fixedly connected, or coaxially fixedly connected with a flange or a transmission body, or coaxially sleeved with a transmission body; an upper end of the wheel axle and the upper connection portion are directly fixedly connected, or coaxially fixedly connected with a flange or a transmission body, or coaxially sleeved with a transmission body; when the lower end of the wheel axle and the lower connection portion are directly fixedly connected, or coaxially fixedly connected with the flange, or coaxially sleeved with the transmission body, the upper end of the wheel axle is coaxially fixedly connected to a transmission body; when the upper end of the wheel axle and the upper connection portion are directly fixedly connected, or coaxially fixedly connected with the flange, or coaxially sleeved with the transmission body, the lower end of the wheel axle is coaxially fixedly connected to a transmission body; the transmission body is rotatably connected to the bearing body;
the intermediate connection portion comprises a cantilever for the vertical axis wind turbine; there is at least one intermediate connection portion; each of intermediate connection portion is respectively located at the upper end of the wheel axle, at the lower end of the wheel axle, or between the upper and lower ends of the wheel axle;
when the intermediate connection portion is located at the upper end of the wheel axle, if the upper end of the wheel axle is directly fixedly connected to the intermediate connection portion, then a support connection end of the cantilever for the vertical axis wind turbine is connected to the upper end of the wheel axle directly or via a connection segment; if the upper end of the wheel axle is coaxially fixedly connected with a flange or a transmission body or is coaxially sleeved with a transmission body, then the support connection end of the cantilever for the vertical axis wind turbine is connected to the flange or the transmission body directly or via a connection segment;
when the intermediate connection portion is located at the lower end of the wheel axle, if the lower end of the wheel axle is directly fixedly connected to the intermediate connection portion, then the support connection end of the cantilever for the vertical axis wind turbine is connected to the lower end of the wheel axle directly or via a connection segment; if the lower end of the wheel axle is coaxially fixedly connected with a flange or a transmission body or is coaxially sleeved with a transmission body, then the support connection end of the cantilever for the vertical axis wind turbine is connected to the flange or the transmission body directly or via a connection segment;
when the intermediate connection portion is located between the upper and lower ends of the wheel axle, the support connection end of the cantilever for the vertical axis wind turbine is connected to the wheel axle directly or via a connection segment, or the support connection end of the cantilever for the vertical axis wind turbine is connected to the flange or the transmission body directly or via a connection segment;
a blade connection of the cantilever for the vertical axis wind turbine is connected to the blade directly or via a connection portion or a connecting piece, and the cantilever for the vertical axis wind turbine constitutes a side edge of a shape of the intermediate connection portion;
in the eleventh configuration, the wheel frame further comprises a wheel axle with the vertical rotation axis as a center line; a lower end of the wheel axle and the lower connection portion are directly fixedly connected, or coaxially fixedly connected with a flange or a transmission body, or coaxially sleeved with a transmission body; an upper end of the wheel axle and the upper connection portion are directly fixedly connected, or coaxially fixedly connected with a flange or a transmission body, or coaxially sleeved with a transmission body; when the lower end of the wheel axle and the lower connection portion are directly fixedly connected, or coaxially fixedly connected with a flange, or coaxially sleeved with a transmission body, the upper end of the wheel axle is coaxially fixedly connected to a transmission body; when the upper end of the wheel axle and the upper connection portion are directly fixedly connected, or coaxially fixedly connected with a flange, or coaxially sleeved with a transmission body, the lower end of the wheel axle is coaxially fixedly connected to a transmission body; the transmission body is rotatably connected to the bearing body;
the intermediate connection portion comprises a diagonal tensile piece and a horizontal tensile piece; there is at least one intermediate connection portion, each of intermediate connection portion is respectively located at the upper end of the wheel axle, at the lower end of the wheel axle, or between the upper and lower ends of the wheel axle;
when the intermediate connection portion is located at the upper end of the wheel axle, an upper end of the diagonal tensile piece is fixedly connected to the upper connection portion, and one end of the horizontal tensile piece is fixedly connected to the wheel axle or the flange or the transmission body;
a lower end of the diagonal tensile piece is fixedly connected to the horizontal tensile piece, and the other end of the horizontal tensile piece is directly connected to the blade; or the lower end of the diagonal tensile piece is directly connected to the blade, and the other end of the horizontal tensile piece is fixedly connected to diagonal tensile piece;
when the intermediate connection portion is located at the lower end of the wheel axle, the lower end of the diagonal tensile piece is fixedly connected to the lower connection portion, and one end of the horizontal tensile piece is fixedly connected to the wheel axle or the flange or the transmission body;
the upper end of the diagonal tensile piece is fixedly connected to the horizontal tensile piece, and the other end of the horizontal tensile piece is directly connected to the blade; or the upper end of the diagonal tensile piece is directly connected to the blade, and the other end of the horizontal tensile piece is fixedly connected to diagonal tensile piece;
when the intermediate connection portion is located between the upper and lower ends of the wheel axle, one end of the diagonal tensile piece and one end of the horizontal tensile piece are respectively fixedly connected to the wheel axle or the transmission body;
the other end of the diagonal tensile piece is fixedly connected to the horizontal tensile piece, and the other end of the horizontal tensile piece is directly connected to the blade; or the other end of the diagonal tensile piece is directly connected to the blade, and the other end of the horizontal tensile piece is fixedly connected to the diagonal tensile piece;
the diagonal tensile piece constitutes a side edge of a shape of the intermediate connection portion, and the horizontal tensile piece constitutes a base edge or a base face of a shape of the intermediate connection portion.

11. The vertical axis wind turbine with its blade support shielded of claim 6, 8, or 10, **characterized in that**, the cantilever for the vertical axis wind turbine comprises a first main body component and a second main body component which are fixedly connected via a reinforcing piece; one end of the first main body component and one end of the second main body component are fixedly connected to each other, in contact with each other, or spaced from each other and together form the blade connection end of the cantilever; the other end of the first main body component and the other end of the second main body component are fixedly connected to, in contact with, or spaced from each other and together form the support connection end of the cantilever.

12. The vertical axis wind turbine with its blade support shielded of claim 11, **characterized in that**, shapes of the first and second main body components are respectively and independently selected from straight line shape and arc shape; the first and second main body components are aligned vertically or horizontally or diagonally;
when the blade connection end is connected to the blade of the wind wheel of the vertical axis wind turbine via a connection segment, the connection segment comprises first bending segments respectively extending from the one ends of the first and second main body components, the first bending segments are parallel to each other, intersected and fixedly connected with each other, or overlapped with each other, when the first bending segments are parallel to each other or intersected and fixedly connected with each other, a reinforcing piece is disposed or no reinforcing piece is disposed between the first bending segments;
when the support connection end is connected to the wheel axle of the wind wheel of the vertical axis wind turbine, the transmission body, or the flange via a connection segment, the connection segment comprises second bending segments respectively extending from the other end of the first main body component and the other end of the second main body component, the second bending segments are parallel to each other, intersected and fixedly connected with each other, or overlapped with each other; when the second bending segments are parallel to each other or intersected and fixedly connected with each other, a reinforcing piece is disposed or no reinforcing piece is disposed between the second bending segments.

13. The vertical axis wind turbine with its blade support shielded of claim 6, 8, or 10, **characterized in that**, the cantilever for the vertical axis wind turbine is formed by two sub-cantilevers fixedly connected via a reinforcing piece;
the sub-cantilever comprises a first main body component and a second main body component which are fixedly connected via a reinforcing piece; one end of the first main body component and one end of the second main body component are fixedly connected to each other, in contact with each other, or spaced from each other and together form a first end of the sub-cantilever; the other end of the first main body component and the other end of the second main body component are fixedly connected to each other, in contact with each other, or spaced from each other and together form a second end of the sub-cantilever;
the first ends of the two sub-cantilevers are fixedly connected to each other, in contact with each other, or spaced from each other and together form the blade connection end of the cantilever; the second ends of the two sub-cantilevers are fixedly connected to each other, in contact with each other, or spaced from each other and together form the support connection end of the cantilever.

14. The vertical axis wind turbine with its blade support shielded of claim 13, **characterized in that**, in the sub-cantilever, shapes of the first and second main body components are respectively and independently selected from straight line shape and arc shape; the first and second main body components are aligned vertically or horizontally or diagonally;
the two sub-cantilevers are aligned vertically or horizontally or diagonally;
when the blade connection end is connected to the blade of the wind wheel of the vertical axis wind turbine via a connection segment, the connection segment comprises first bending segments respectively extending from one end of the first main body component and one end of the second main body component in each sub-cantilever; the first bending segments are parallel to each other, intersected and fixedly connected with each other, or overlapped with each other; when the first bending segments are parallel to each other or intersected and fixedly connected with each other, a reinforcing piece is disposed or no reinforcing piece is disposed between the first bending segments;
when the support connection end is connected to the wheel axle of the wind wheel of the vertical axis wind turbine, the transmission body, or the flange via a connection segment, the connection segment comprises second bending segments respectively extending from the other end of the first main body component and the other end of the second main body component in each sub-cantilever; the second bending segments are parallel to each other, intersected and fixedly connected with each other, or overlapped with each other; when the second bending segments are parallel to each other or intersected and fixedly connected with each other, a reinforcing piece is disposed or no reinforcing piece is disposed between the second bending segments.

15. The vertical axis wind turbine with its blade support shielded of claim 12 or 14, **characterized in that**, the reinforcing piece is in a shape of a straight line or a letter X.

16. The vertical axis wind turbine with its blade support shielded of claim 6, 8, or 10, **characterized in that**, when the diagonal tensile piece is used, the diagonal tensile piece adopts a diagonal bracing structure or a bending cantilever structure.
in the diagonal bracing structure, the diagonal tensile piece comprises a straight line-shaped or arc-shaped main body component, a first bending segment is extended from one end of the main body component and fixedly connected to the wheel axle, the transmission body, or the flange, a second bending segment is extended from the other end of the main body component and fixedly connected to the tensile piece or the horizontal tensile piece;
in the bending cantilever structure, the diagonal tensile piece comprises a straight line-shaped or arc-shaped main body component, a first bending segment is extended from one end of the main body component and fixedly connected to the wheel axle, the transmission body, or the flange, or one end of the main body component is directly fixedly connected to the wheel axle, the transmission body, or the flange; a second bending segment is extended from the other end of the main body component and connected to the blade via the baffle, or the other end of the main body component is directly connected to the blade via the baffle.

17. The vertical axis wind turbine with its blade support shielded of claim 6, 8, or 10, **characterized in that**, when a horizontal tensile piece is used, the horizontal tensile piece adopts a straight line-shaped cantilever structure;
in the straight line-shaped cantilever structure, the horizontal tensile piece comprises a straight line-shaped main body component, one end of the main body component is connected to the blade via the baffle or integrated with the baffle; the other end of the main body component is directly fixedly connected to the wheel axle, or a bending segment is extended from the other end of the main body component and fixedly connected to the wheel axle.

18. The vertical axis wind turbine with its blade support shielded of claim 6, 8, or 10, **characterized in that**, when a tensile piece is used, the tensile piece adopts one of a straight form structure, a polygonal structure, and a special-shaped structure.
in the straight form structure, the tensile piece comprises at least one straight line shaped main body component; the main body component is located between adjacent two blades or two baffles or two diagonal tensile pieces or two cantilevers for the vertical axis wind turbine, two ends of the main body component are respectively fixedly connected to corresponding baffle or diagonal tensile piece or cantilever for the vertical axis wind turbine;
in the polygonal structure, the tensile piece is in a shape of a polygon, a vertex of the polygon is corresponding to the blade or the baffle, the vertex of the polygon is fixedly connected to the corresponding baffle or diagonal tensile piece or cantilever for the vertical axis wind turbine;
in the special-shaped structure, there is at least one tensile piece respectively located between adjacent two blades or baffles; the tensile piece is formed by two parallel straight line-shaped components or intersected bending line-shaped components which are fixedly connected via a reinforcement rib, the tail end of the straight line-shaped component or the bending line-shaped component is fixedly connected to the corresponding baffle;
when a transmission body is used, the transmission body adopts a structural body to connect with the bearing body and provide a transmitting function, comprising a cylinder, a circular tube, a flange, a circular ring, a component with a circular inner edge and a polygonal outer edge, or a vertically arranged double-layered or multilayered structural body formed by any combination of the flange, the circular ring, and the component with the circular inner edge and the polygonal outer edge.

19. The vertical axis wind turbine with its blade support shielded of claim 1 or 2, **characterized in that**, two ends of the blade are fixedly connected to or rotatably connected to the corresponding baffle directly;
or
two ends of the blade are respectively fixedly connected to a connecting piece, the connecting piece is a rod-shaped component, and the rod-shaped component is fixedly connected to or rotatably connected to the corresponding baffle;
or
two ends of the blade are respectively fixedly connected to a connecting piece, the connecting piece is a plate, the plate is fixedly connected to or rotatably connected to the corresponding baffle via a mounting shaft; when the plate is rotatably connected to the corresponding baffle, the plate is provided with a connection hole to connect with an output of a power controller directly or in a transmission body way via a connecting rod; the power controller is placed on the corresponding baffle; the power controller is a resilient controller or an electric controller;
or
the bearing body is a structure body comprising at least one of an upright column, a cross-bar or a truss, and a vertical shaft;
or
the bearing body is selected from: an upright column or a tower; a cross-bar or a truss rotatably or fixedly connected to a tower or on an upright column; a cross-bar or a truss rotatably or fixedly connected to an upright column or on a tower, and a vertical shaft fixedly connected to the cross-bar or the truss; a floating buoy tower with an upright column; a cross-bar or a truss rotatably or fixedly connected to a floating buoy tower or on an upright column; a cross-bar or a truss rotatably or fixedly connected to a floating buoy tower or on an upright column, and a vertical shaft fixedly connected to the cross-bar or the truss;
or
there is at least one wind wheel; when there are at least two wind wheels, the at least two wind wheels comprise a pair of wind wheels arranged symmetrically at two sides of a symmetry axis and/or comprise wind wheels located on a symmetry axis; rotation directions of the pair of wind wheels are opposite.
